# EUROPEAN PATENT APPLICATION

(11) **EP 4 450 528 A1**
(43) Date of publication of application: **23.10.2024**
(21) Application number: 22907242.6
(22) Date of filing: 02.12.2022
(51) Int. Cl.: C08F 290/06, C08G 65/333

(54) **FLUORINE-CONTAINING ACTIVE ENERGY RAY-CURABLE COMPOSITION, CURED PRODUCT, AND ARTICLE**

(30) Priority: 14.12.2021 JP 2021202528
(71) Applicant: SHIN-ETSU CHEMICAL CO., LTD., Tokyo 1000005 (JP)
(72) Inventor: MORI Seiya, Annaka-shi, Gunma 379-0224 (JP); SAKANO Yasunori, Annaka-shi, Gunma 379-0224 (JP); KOSHIKAWA Hidenori, Annaka-shi, Gunma 379-0125 (JP)
(74) Representative: Ter Meer Steinmeister & Partner
(86) International application number: PCT/JP2022/044497
(87) International publication number: WO 2023/112714

(57) **Abstract**

The present invention provides a fluorine-containing active energy ray-curable composition containing specific amounts of
(A) a fluoropolyether group-containing acrylic compound represented by the following formula:

V¹-Rf¹-Z-Y(X)_{b}

(Rf¹ is a divalent perfluoropolyether group. Z is a divalent organic group. Y is a (b+1)-valent organic group. X is an (α-substituted) acrylic group-containing monovalent organic group. V¹ is H, F, or -Z-Y(X)_{b}. b is 1-10.),
(B) an acrylic compound having a viscosity of 5,000 mPa·s or less at 23°C and having an (α-substituted) acrylic group in one molecule thereof, and
(C) a photopolymerization initiator,
wherein the viscosity at 23°C is 10-100,000 mPa·s, and the refractive index at a temperature of 25°C and a wavelength of 589 nm is 1.390 or less. The fluorine-containing active energy ray-curable composition is capable of being cured by means of active energy rays, such as ultraviolet rays or electron beams, is capable of forming a transparent cured product having a low refractive index and excellent water vapor resistance, and is also capable of having excellent handling properties.

## Description

### TECHNICAL FIELD

This invention relates to a fluorinated, actinic energy ray-curable composition which is capable of forming a transparent cured product having a low refractive index and satisfactory water-vapor resistance and is easy to handle, a cured product of the composition, and an article comprising the cured product.

### BACKGROUND ART

In the prior art, polymers comprising polymerizable monomers having a perfluoroalkyl group in side chain, for example, acrylic acid fluorinated alkyl esters and methacrylic acid fluorinated alkyl esters are well known as fluorine compounds which are curable upon exposure to light such as UV. Many attempts are made to utilize these fluorinated acrylic compounds in optical materials for taking advantage of effective cure upon UV exposure, high transparency and a low refractive index. For example, Patent Document 1 (JP-A H06-136062) discloses the utilization of fluorinated acrylic compounds in antireflection film application. Patent Document 2 (JP-A H05-032749) discloses the utilization of fluorinated acrylic compounds as optical fiber coating material.

On the other hand, as the fluorine content of fluorinated acrylic compounds is increased for the purpose of further lowering a refractive index or other purposes, the fluorinated acrylic compounds become less soluble in non-fluorinated organic compounds and insoluble in conventional photopolymerization initiators. This raises the problem that transparent cured products are not obtained or cured products become more crystalline, losing transparency. It is then difficult to obtain transparent cured products having a refractive index below a certain value.

Under the circumstances, the inventors continued the development of fluorinated acrylic compounds. The inventors proposed in Patent Document 3 (JP-A 2006-233172), for example, a fluorinated curable composition which is UV-curable into a transparent cured product having a low refractive index.

Although these compositions are able to form transparent cured products having a low refractive index, they suffer the problem that the cured product undergoes substantial degradation of dynamic properties upon exposure to water vapor. They also suffer the problem that a photopolymerization initiator modified with a perfluoropolyether group must be separately synthesized.

### PRIOR ART DOCUMENTS

### PATENT DOCUMENTS

| | |
|---|---|
| Patent Document 1: | JP-A H06-136062 |
| Patent Document 2: | JP-A H05-032749 |
| Patent Document 3: | JP-A 2006-233172 |

### SUMMARY OF INVENTION

### TECHNICAL PROBLEM

An object of the invention, which has been made under the above-mentioned circumstances, is to provide a fluorinated, actinic energy ray-curable composition which is curable with actinic energy ray such as UV or EB, capable of forming a transparent cured product having a low refractive index and satisfactory water-vapor resistance, and easy to handle, a cured product of the composition, and an article comprising the cured product.

### SOLUTION TO PROBLEM

Making extensive investigations to attain the above object, the inventors have found that when a fluorinated, actinic energy ray-curable composition essentially comprises
(A) 100 parts by weight of a fluoropolyether-containing acrylic compound having the general formula (1):

   V¹-Rf¹-Z-Y(X)_{b} (1)

   wherein Rf¹ is a divalent perfluoropolyether group composed of C₁-C₆ perfluoroalkylene groups and oxygen and having a number average molecular weight of 500 to 40,000, Z is a divalent organic group which may intermediately contain a cyclic structure, Y is a (b+1)-valent C₁-C₂₀ organic group, X is independently a monovalent organic group containing an acryloyl or α-substituted acryloyl group, at least one acryloyl or α-substituted acryloyl group being contained per molecule on the average, V¹ is hydrogen, fluorine or a monovalent group of the formula: -Z-Y(X)_{b}, and b is an integer of 1 to 10,
(B) 0.1 to 300 parts by weight of an acrylic compound containing one or two acryloyl or α-substituted acryloyl groups per molecule, exclusive of component (A), the acrylic compound having a viscosity of up to 5,000 mPa·s at 23°C, and
(C) 0.01 to 20 parts by weight of a photopolymerization initiator, the composition having a viscosity of 10 to 100,000 mPa·s at 23°C and a refractive index of up to 1.390 at temperature 25°C and wavelength 589 nm, the resulting composition is curable with actinic energy ray such as UV or EB, capable of forming a transparent cured product having a low refractive index and satisfactory water-vapor resistance, and easy to handle.

Accordingly, the invention provides a fluorinated, actinic energy ray-curable composition, a cured product of the composition, and an article comprising the cured product, as defined below.
[1] A fluorinated, actinic energy ray-curable composition essentially comprising
   (A) 100 parts by weight of a fluoropolyether-containing acrylic compound having the general formula (1):

      V¹-Rf¹-Z-Y(X)_{b} (1)

      wherein Rf¹ is a divalent perfluoropolyether group composed of C₁-C₆ perfluoroalkylene groups and oxygen and having a number average molecular weight of 500 to 40,000, Z is a divalent organic group which may intermediately contain a cyclic structure, Y is a (b+1)-valent C₁-C₂₀ organic group, X is independently a monovalent organic group containing an acryloyl or α-substituted acryloyl group, at least one acryloyl or α-substituted acryloyl group being contained per molecule on the average, V¹ is hydrogen, fluorine or a monovalent group of the formula: -Z-Y(X)_{b}, and b is an integer of 1 to 10,
   (B) 0.1 to 300 parts by weight of an acrylic compound containing one or two acryloyl or α-substituted acryloyl groups per molecule, exclusive of component (A), the acrylic compound having a viscosity of up to 5,000 mPa·s at 23°C, and
   (C) 0.01 to 20 parts by weight of a photopolymerization initiator,
      the composition having a viscosity of 10 to 100,000 mPa s at 23°C and a refractive index of up to 1.390 at temperature 25°C and wavelength 589 nm.
[2] The fluorinated, actinic energy ray-curable composition of [1], which is free of a volatile organic compound not having an acryloyl-reactive group.
[3] The fluorinated, actinic energy ray-curable composition of [1] or [2] wherein in the general formula (1), Rf¹ is a divalent perfluoropolyether group having the following formula: 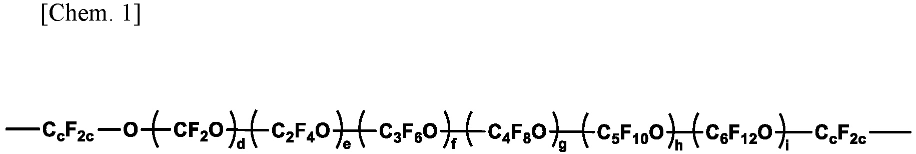 wherein c is independently for each unit an integer of 2 to 6, d, e, f, g, h and i each are an integer of 0 to 200, d+e+f+g+h+i = 4 to 200, each unit may be straight or branched, individual units in parentheses with subscripts d, e, f, g, h and i may be randomly arranged.
[4] The fluorinated, actinic energy ray-curable composition of any one of [1] to [3] wherein component (A) is a fluoropolyether-containing acrylic compound having the general formula (2):

   V²-Rf²-C(=O)-NR¹ₐ[Y²(X²)_{b'}]₂₋ₐ (2)

   wherein Rf² is a divalent perfluoropolyether group composed of C₁-C₆ perfluoroalkylene groups and oxygen and having a number average molecular weight of 500 to 40,000, Y² is independently a (b'+1)-valent C₁-C₂₀ organic group, X² is independently a monovalent organic group containing an acryloyl or α-substituted acryloyl group, at least one acryloyl or α-substituted acryloyl group being contained per molecule on the average, R¹ is hydrogen or a C₁-C₈ monovalent hydrocarbon group, V² is hydrogen, fluorine or a monovalent group of the formula: -C(=O)-NR¹ₐ[Y²(X²)_{b'}]₂₋ₐ, a is 0 or 1, and b' is an integer of 1 to 10.
[5] The fluorinated, actinic energy ray-curable composition of [4] wherein in the general formula (2), Rf² is a divalent perfluoropolyether group having the following formula: 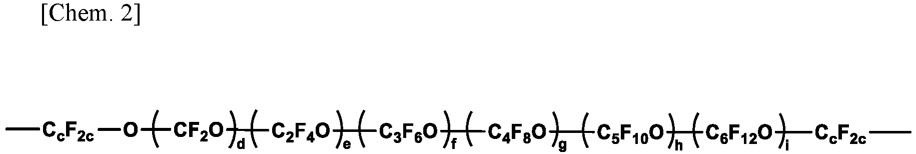 wherein c is independently for each unit an integer of 2 to 6, d, e, f, g, h and i each are an integer of 0 to 200, d+e+f+g+h+i = 4 to 200, each unit may be straight or branched, individual units in parentheses with subscripts d, e, f, g, h and i may be randomly arranged.
[6] The fluorinated, actinic energy ray-curable composition of [4] or [5] wherein in the general formula (2), Rf² is selected from divalent perfluoropolyether groups having the following structural formulae:

   -CF₂CF₂O-(CF₂CF₂CF₂O)_{q}-CF₂CF₂-

   wherein q is an integer of 4 to 200, 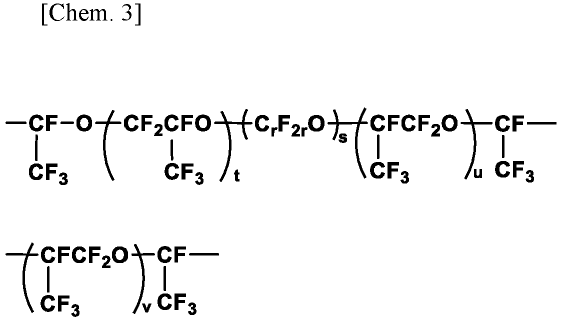
   wherein r is an integer of 1 to 6, CᵣF₂ᵣO may be straight or branched, s is an integer of 0 to 6, t and u each are an integer of 1 to 200, t+u is an integer of 2 to 200, s+t+u is an integer of 4 to 200, and v is an integer of 5 to 200.
[7] The fluorinated, actinic energy ray-curable composition of any one of [4] to [6] wherein in the general formula (2), R¹ is hydrogen and a is 1.
[8] The fluorinated, actinic energy ray-curable composition of any one of [4] to [7] wherein in the general formula (2), Y² is selected from groups having the following formulae: 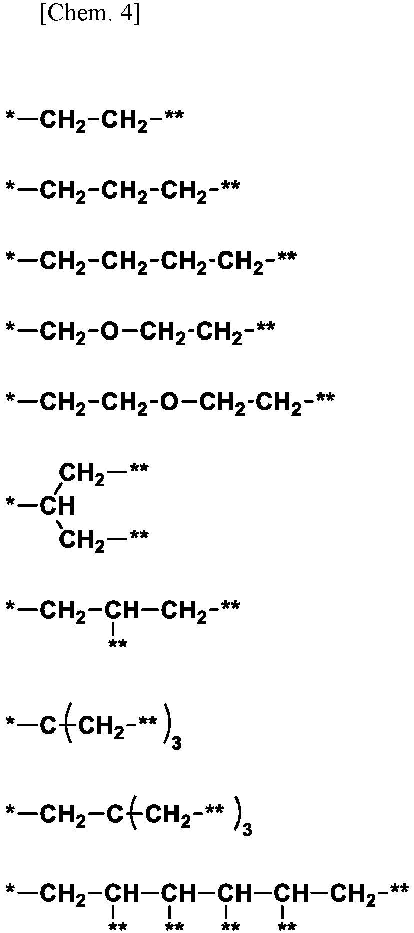 wherein * designates a point of attachment to N and ** designates a point of attachment to X².
[9] The fluorinated, actinic energy ray-curable composition of any one of [4] to [8] wherein in the general formula (2), X² has the following structural formula: 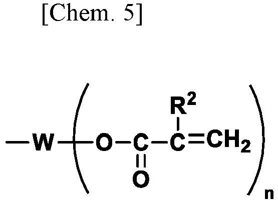 wherein R² is independently hydrogen, fluorine, methyl or trifluoromethyl, W is a single bond, or a di- or trivalent hydrocarbon group which may contain at least one bond selected from ether bond, ester bond and urethane bond, and n is 1 or 2.
[10] The fluorinated, actinic energy ray-curable composition of any one of [4] to [9] wherein in the general formula (2), X² is selected from groups having the following formulae. 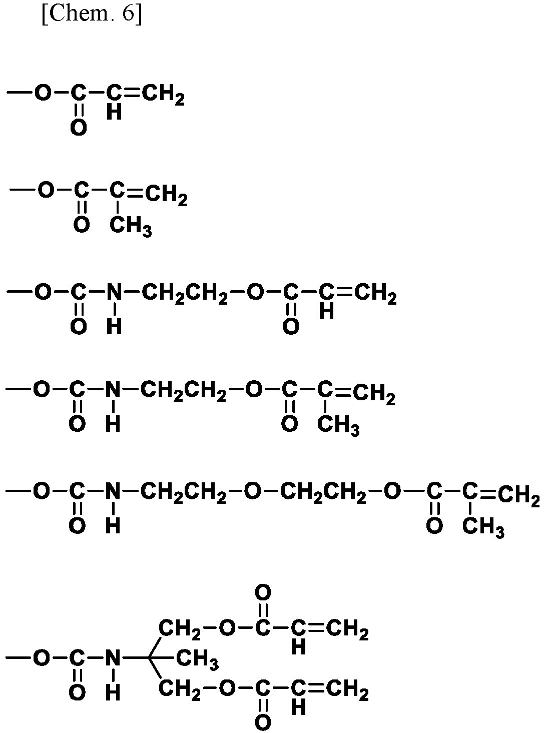
[11] The fluorinated, actinic energy ray-curable composition of any one of [4] to [10] wherein component (A) is a fluoropolyether-containing acrylic compound having any one of the following formulae: 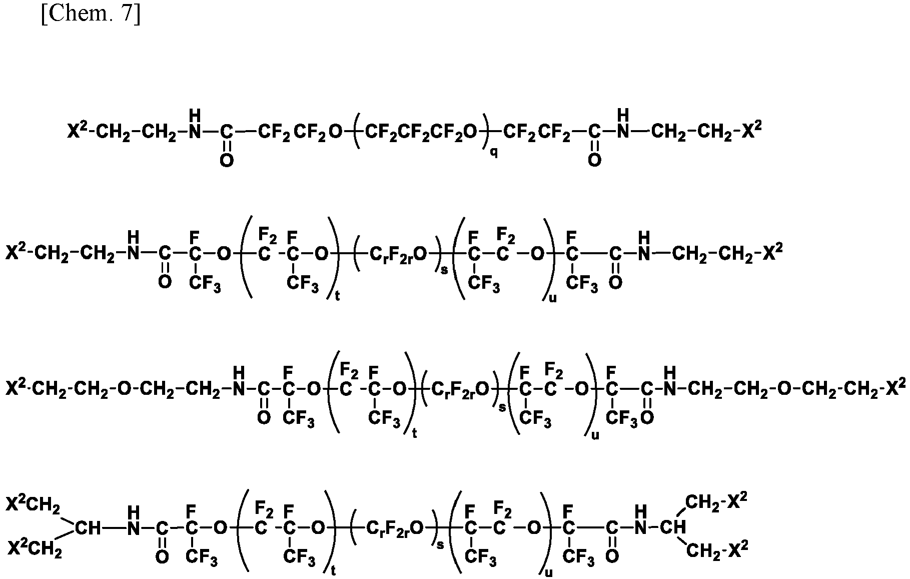 wherein X² is as defined above, q is an integer of 4 to 200, r is an integer of 1 to 6, CᵣF₂ᵣO may be straight or branched, s is an integer of 0 to 6, t and u each are an integer of 1 to 200, t+u is an integer of 2 to 200, and s+t+u is an integer of 4 to 200.
[12] The fluorinated, actinic energy ray-curable composition of any one of [1] to [11] wherein component (B) is a compound containing a fluoroalkyl group and one or two acryloyl or α-substituted acryloyl groups.
[13] The fluorinated, actinic energy ray-curable composition of any one of [1] to [12] wherein component (B) is an acrylic compound having any one of the following formulae. 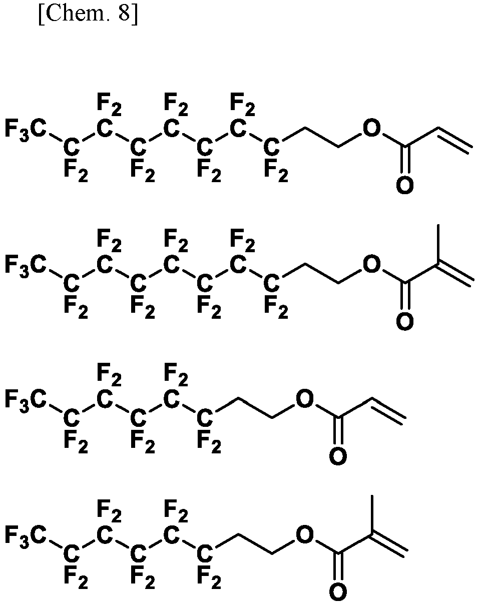 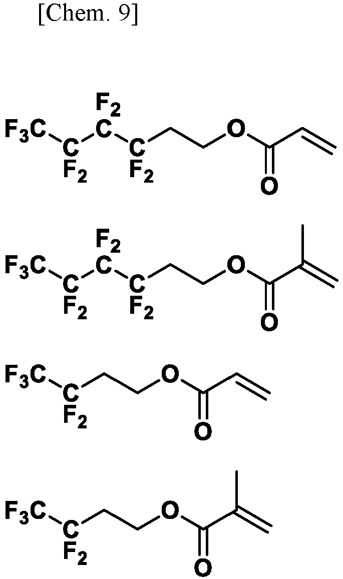 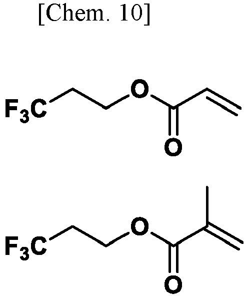 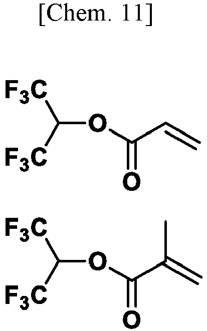 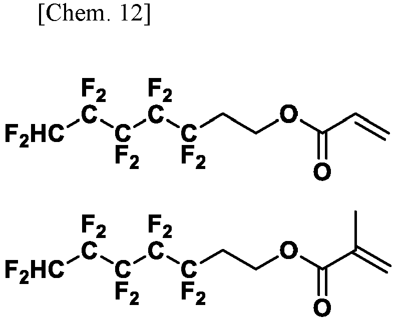 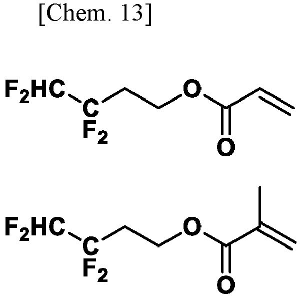 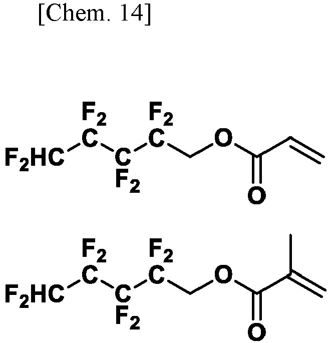
[14] The fluorinated, actinic energy ray-curable composition of any one of [1] to [13] wherein component (B) is a compound containing at least one C₁-C₈ perfluoroalkyl group and one or two acryloyl or α-substituted acryloyl groups.
[15] The fluorinated, actinic energy ray-curable composition of any one of [1] to [14] wherein component (B) is an acrylic compound having any one of the following formulae. 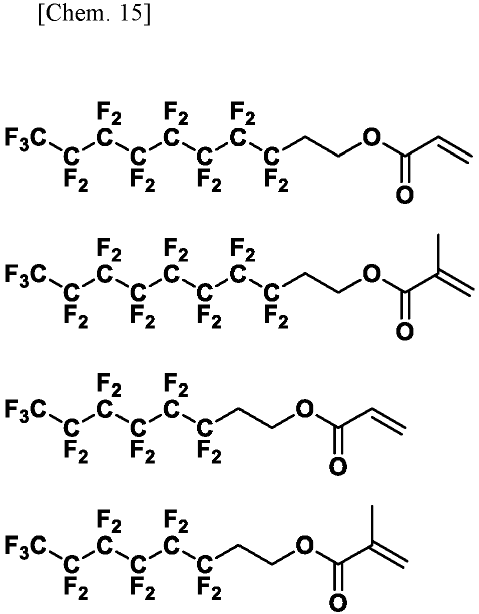 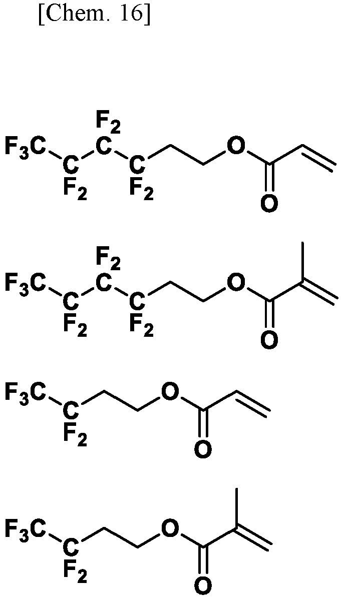 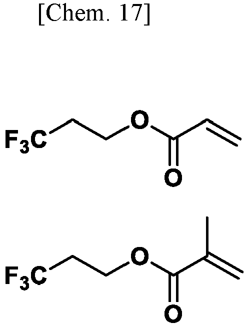
[16] The fluorinated, actinic energy ray-curable composition of any one of [1] to [15] wherein the photopolymerization initiator as component (C) is free of fluorine in its structure.
[17] The fluorinated, actinic energy ray-curable composition of any one of [1] to [16] which is for use in an antireflective agent or optical fiber-coating agent.
[18] A cured product obtained by curing the fluorinated, actinic energy ray-curable composition of any one of [1] to [17].
[19] The cured product of [18], having a refractive index of up to 1.400 at temperature 25°C and wavelength 589 nm.
[20] The cured product of [18] or [19], having an initial hardness and a hardness after heating under conditions: 95°C and RH 100% for 12 hours, a change of hardness falling within the range of initial hardness ± 10 points.
[21] An article which is entirely or at least partially constructed by the cured product of any one of [18] to [20].
[22] The article of [21], which is an optical part.
[23] The article of [21] or [22], which is a lens, antireflective coating or optical fiber.

### ADVANTAGEOUS EFFECTS OF INVENTION

The fluorinated, actinic energy ray-curable composition of the invention is curable with actinic energy ray such as UV or EB, capable of forming a transparent cured product having a low refractive index and satisfactory water-vapor resistance, and easy to handle. The fluorinated, actinic energy ray-curable composition is thus useful as a material for forming various optical parts including antireflective agents, optical fiber-coating agents, and lenses.

### DESCRIPTION OF EMBODIMENTS

The invention provides a fluorinated (i.e., fluorine-containing), actinic energy ray-curable composition comprising as essential components,
(A) 100 parts by weight of a fluoropolyether-containing acrylic compound having the general formula (1):

   V¹-Rf¹-Z-Y(X)_{b} (1)

   wherein Rf¹ is a divalent perfluoropolyether group composed of C₁-C₆ perfluoroalkylene groups and oxygen and having a number average molecular weight of 500 to 40,000, Z is a divalent organic group which may intermediately contain a cyclic structure, Y is a (b+1)-valent C₁-C₂₀ organic group, X is independently a monovalent organic group containing an acryloyl or α-substituted acryloyl group, at least one acryloyl or α-substituted acryloyl group being contained per molecule on the average, V¹ is hydrogen, fluorine or a monovalent group of the formula: -Z-Y(X)_{b}, and b is an integer of 1 to 10,
(B) 0.1 to 300 parts by weight of an acrylic compound containing one or two acryloyl or α-substituted acryloyl groups per molecule, exclusive of component (A), the acrylic compound having a viscosity of up to 5,000 mPa·s at 23°C, and
(C) 0.01 to 20 parts by weight of a photopolymerization initiator,
   the composition having a viscosity of 10 to 100,000 mPa s at 23°C and a refractive index of up to 1.390 at temperature 25°C and wavelength 589 nm.

Since the fluorinated, actinic energy ray-curable composition comprises as component (A) a fluoropolyether-containing acrylic compound which has a perfluoropolyether group as a group providing a low refractive index and water-vapor resistance, and an acryloyl or α-substituted acryloyl group, the composition can be cured with actinic energy radiation such as ultraviolet (UV) or electron beam (EB) and form a transparent cured product having a low refractive index and satisfactory water-vapor resistance.

The first essential component (A) in the fluorinated, actinic energy ray-curable composition is a fluoropolyether-containing acrylic compound having the general formula (1).

V¹-Rf¹-Z-Y(X)_{b} (1)

As used herein, the term "acrylic compound" collectively refers to compounds having an acryloyl group and compounds having an α-substituted acryloyl group, and encompasses compounds having two or more acryloyl or α-substituted acryloyl groups introduced at side chains or ends of various polymers by any desired method. As used herein, the term "(meth)acrylate" refers to one or both of acrylate and methacrylate, "(meth)acryloyl group" refers to one or both of acryloyl and methacryloyl groups, and "(meth)acrylic acid" refers to one or both of acrylic acid and methacrylic acid.

In the formula (1), Rf¹ is a divalent perfluoropolyether group composed of C₁-C₆ perfluoroalkylene groups and oxygen and having a number average molecular weight (Mn) of 500 to 40,000. Rf¹ is preferably a divalent perfluoropolyether group composed of perfluorooxyalkylene structures of 1 to 6 carbon atoms, especially 1 to 3 carbon atoms, as shown below, as main repeating units.

-CF₂O-

-CF₂CF₂O-

-CF(CF₃)CF₂O-

-CF₂CF₂CF₂O-

The group may be a homopolymer of any one of these structures, or a random or block polymer composed of plural structures.

Exemplary of the group Rf¹ having such a structure is the following one.

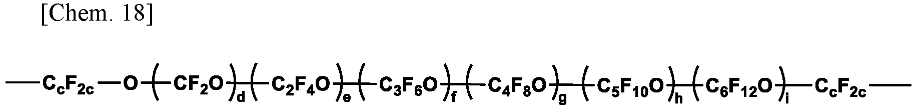

Herein c is independently for each unit an integer of 2 to 6, d, e, f, g, h and i each are an integer of 0 to 200, d+e+f+g+h+i = 4 to 200, each unit may be straight or branched, individual units in parentheses with subscripts d, e, f, g, h and i may be randomly arranged.

In the above formula, c is independently for each unit an integer of 2 to 6, preferably 2 to 4. Since water-vapor resistance is degraded in case of c=1, preferably c is independently for each unit an integer of 2 to 6.

The subscripts d, e, f, g, h and i each are an integer of 0 to 200. Preferably, d is an integer of 0 to 100, e is an integer of 5 to 100, f is an integer of 5 to 100, g is an integer of 0 to 100, h is an integer of 0 to 100, and i is an integer of 0 to 100, and d+e+f+g+h+i is from 4 to 200, preferably from 10 to 150, more preferably from 30 to 150.

In the above formula, each unit may be straight or branched. Individual units in parentheses with subscripts d, e, f, g, h and i may be randomly arranged.

The number average molecular weight (Mn) of the structure corresponding to Rf¹ is in the range of 500 to 40,000, preferably 2,000 to 25,000 while its molecular weight distribution or degree-of-polymerization distribution is not particularly limited. If Mn is less than 500, a lowering of fluorine content leads to a high refractive index. If Mn exceeds 40,000, a loss of ease of handling due to an increased viscosity and a lowering of compatibility with a polymerization initiator due to an increased fluorine content exceed the negligible level. As used herein, the molecular weight (or degree of polymerization or number of repeating units) may be determined as a number average molecular weight (or number average degree of polymerization) by gel permeation chromatography (GPC) versus polystyrene standards using a fluorochemical solvent as developing solvent, or as a number average molecular weight (or number average degree of polymerization) computed from a characteristic peak intensity ratio of end structure to backbone structure of the fluoropolyether-containing acrylic compound as analyzed by ¹H-NMR and ¹⁹F-NMR spectroscopy.

In the formula (1), Z is a divalent organic group which may intermediately contain a cyclic structure. Groups of the structure shown below are exemplary of Z.

[Chem. 19] ***-CH₂-** *-CH₂-O-****

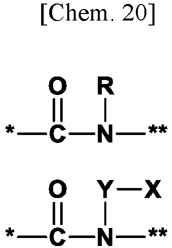

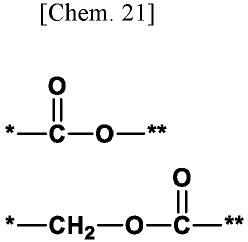

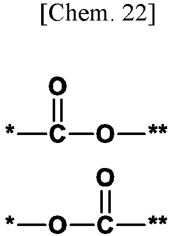

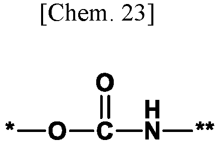

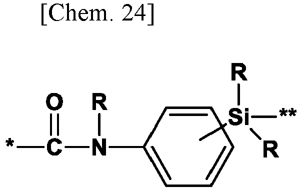

Herein, R is independently hydrogen or a C₁-C₈ monovalent hydrocarbon group. Y and X are as will be defined later. In the formulae, * designates a point of attachment i to Rf¹ and ** designates a point of attachment to Y.

In the formula (1), Y is a (b+1)-valent C₁-C₂₀, preferably C₁-C₈ organic group. Groups of the following formulae are exemplary of Y.

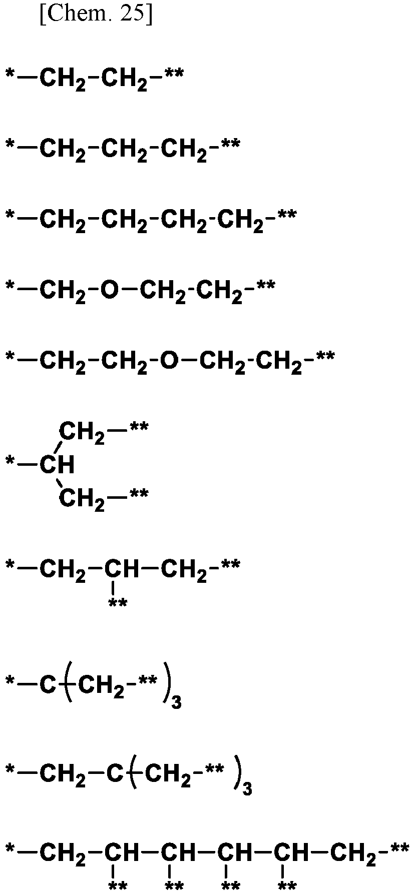

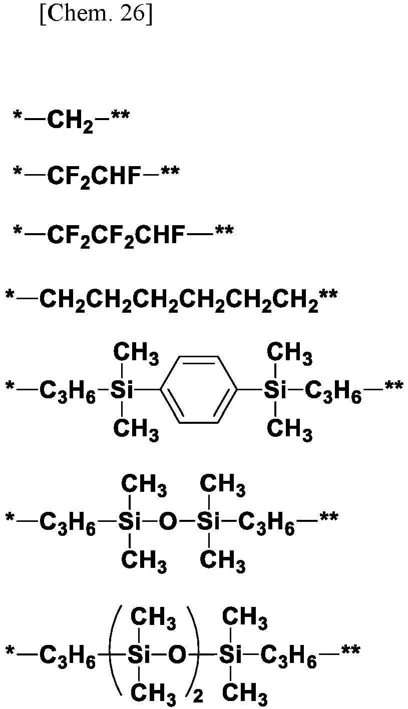

Herein, * designates a point of attachment to Z and ** designates a point of attachment to X.

In formula (1), X is independently a monovalent organic group containing an acryloyl or α-substituted acryloyl group. At least one acryloyl or α-substituted acryloyl group is contained per molecule on the average.

Groups of the following structure are exemplary of X.

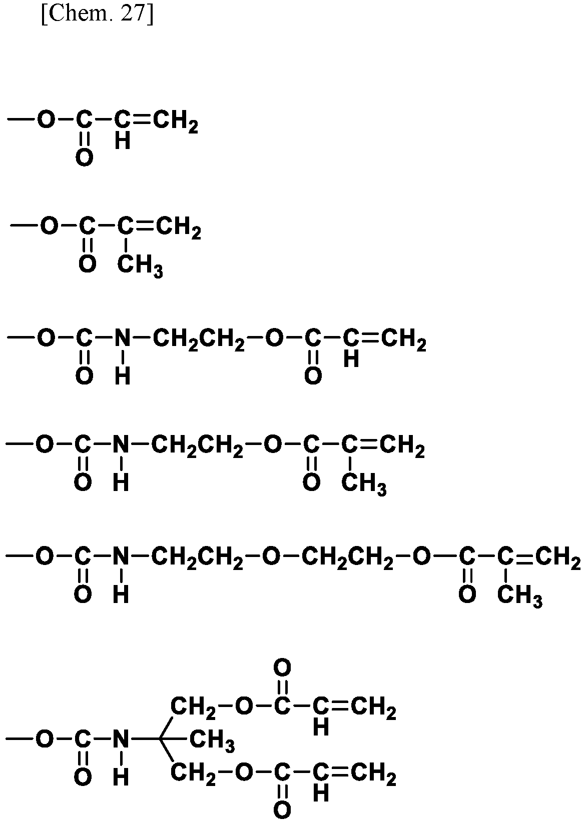

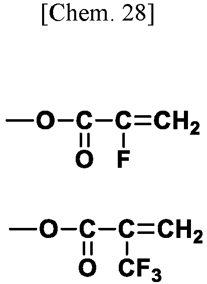

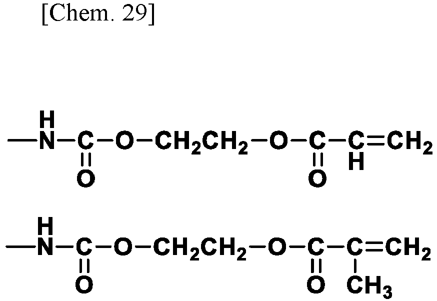

In the formula (1), V¹ is hydrogen, fluorine or a monovalent group of the formula: -Z-Y(X)_{b}, preferably a monovalent group of the formula: -Z-Y(X)_{b}.

When V¹ is a monovalent group of the formula: -Z-Y(X)_{b}, which indicates that at least two acryloyl or α-substituted acryloyl groups are contained per molecule on the average, a composition comprising the relevant compound forms a reticulate network and cures into a cured product having satisfactory dynamic properties. It is noted that when V¹ is a monovalent group of the formula: -Z-Y(X)_{b}, a plurality of Z, Y, X, and b in formula (1) may be identical or different.

In the formula (1), b is an integer of 1 to 10, preferably 1 or 2.

The fluoropolyether-containing acrylic compound having the formula (1) as component (A) is preferably a compound having the general formula (2).

V²-Rf²-C(=O)-NR¹ₐ[Y²(X²)_{b'}]₂₋ₐ (2)

When the fluoropolyether-containing acrylic compound as component (A) has the formula (2), at least one end of Rf² is attached to the amide structure. In general, due to the electron attraction of fluorine atoms, the end of Rf² is highly reactive and susceptible to hydrolysis. Nevertheless, when a cured product of the inventive composition is exposed to water vapor, the compound is susceptible to hydrolysis due to the high bond energy of amide bond, which leads to quite satisfactory water-vapor resistance.

Further, when the fluoropolyether-containing acrylic compound as component (A) contains an amide bond, the amide structure functions as a hydrogen bond acceptor. The compatibility of the acrylic compound with a photopolymerization initiator is improved by the interaction with hydrogen in the initiator. As a result, a transparent composition is advantageously formed.

In the formula (2), Rf² is a divalent perfluoropolyether group composed of C₁-C₆ perfluoroalkylene groups and oxygen and having a Mn of 500 to 40,000. Rf² is preferably a divalent perfluoropolyether group composed of perfluorooxyalkylene structures of 1 to 6 carbon atoms, especially 1 to 3 carbon atoms, as shown below, as main repeating units.

-CF₂O-

-CF₂CF₂O-

-CF(CF₃)CF₂O-

-CF₂CF₂CF₂O-

The group may be a homopolymer of any one of these structures, or a random or block polymer composed of plural structures.

Exemplary of the group Rf² having such a structure is the following one. 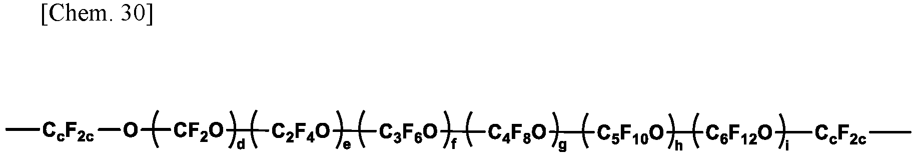 Herein c is independently for each unit an integer of 2 to 6, d, e, f, g, h and i each are an integer of 0 to 200, d+e+f+g+h+i is from 4 to 200, each unit may be straight or branched, and individual units in parentheses with subscripts d, e, f, g, h and i may be randomly arranged.

In the above formula, c is independently for each unit an integer of 2 to 6, preferably 2 to 4. In case of c=1, water-vapor resistance is lowered. For this reason, preferably c is independently for each unit an integer of 2 to 6.

The subscripts d, e, f, g, h and i each are an integer of 0 to 200. Preferably, d is an integer of 0 to 100, e is an integer of 5 to 100, f is an integer of 5 to 100, g is an integer of 0 to 100, h is an integer of 0 to 100, and i is an integer of 0 to 100, and d+e+f+g+h+i is from 4 to 200, preferably from 10 to 150, more preferably from 30 to 150.

In the above formula, each unit may be straight or branched. Individual units in parentheses with subscripts d, e, f, g, h and i may be randomly arranged.

The number average molecular weight (Mn) of the structure corresponding to Rf² is in the range of 500 to 40,000, preferably 2,000 to 25,000 while its molecular weight distribution or degree-of-polymerization distribution is not particularly limited. If Mn is less than 500, a lowering of fluorine content leads to a high refractive index. If Mn exceeds 40,000, a loss of ease of handling due to an increased viscosity and a lowering of compatibility with a polymerization initiator due to an increased fluorine content exceed the negligible level. As used herein, the molecular weight (or degree of polymerization or number of repeating units) may be determined as a number average molecular weight (or number average degree of polymerization) by gel permeation chromatography (GPC) versus polystyrene standards using a fluorochemical solvent as developing solvent, or as a number average molecular weight (or number average degree of polymerization) computed from a characteristic peak intensity ratio of end structure to backbone structure of the fluoropolyether-containing acrylic compound as analyzed by ¹H-NMR and ¹⁹F-NMR spectroscopy.

Exemplary of the group Rf² having such a structure are the following structures.

-CF₂CF₂O-(CF₂CF₂CF₂O)_{q}-CF₂CF₂-

Herein q is an integer of 4 to 200, preferably 10 to 150. 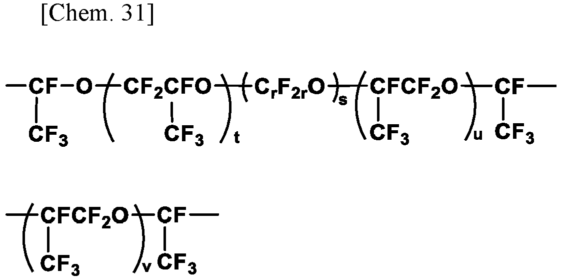 Herein r is an integer of 1 to 6, preferably 2 to 4; CᵣF₂ᵣO may be straight or branched; s is an integer of 0 to 6, preferably 1 to 4; t is an integer of 1 to 100, preferably 5 to 80; u is an integer of 1 to 100, preferably 5 to 80; t+u is an integer of 2 to 200, preferably 10 to 150; s+t+u is an integer of 4 to 200, preferably 10 to 150; v is an integer of 5 to 200, preferably 10 to 150.

The following structures are most preferred examples of Rf². Although the end portion of Rf² is, in general, highly reactive and susceptible to hydrolysis due to the electron attraction of fluorine atoms, the group Rf² of the following structure wherein the end portion of Rf² is shielded by C₂F₄ group, more preferably CF(CF₃) group is preferred because it is substantially unsusceptible to hydrolysis. This advantageously results in improved water-vapor resistance. 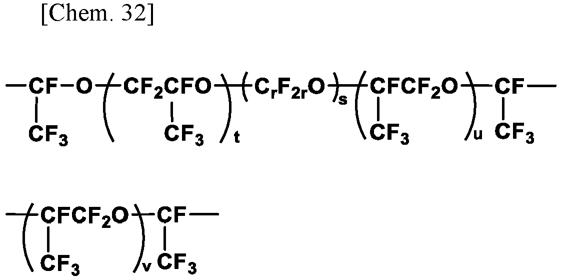 Herein r, s, t, u and v are as defined above.

In the formula (2), R¹ is hydrogen or a C₁-C₈, preferably C₁-C₆ monovalent hydrocarbon group. Examples of the monovalent hydrocarbon group include alkyl groups such as methyl, ethyl, propyl, isopropyl, butyl, isobutyl, tert-butyl, pentyl, neopentyl, hexyl, and octyl; cycloalkyl groups such as cyclohexyl; alkenyl groups such as vinyl, allyl and propenyl; aryl groups such as phenyl, tolyl and xylyl; and aralkyl groups such as benzyl and phenylethyl. R¹ is preferably hydrogen, methyl or ethyl, most preferably hydrogen.

In the formula (2), Y² is independently a (b'+1)-valent C₁-C₂₀, preferably C₁-C₈ organic group, desirably a (b'+1)-valent C₁-C₂₀, preferably C₁-C₈ hydrocarbon group which may contain an ether bond. Preferred structures of Y² are shown below.

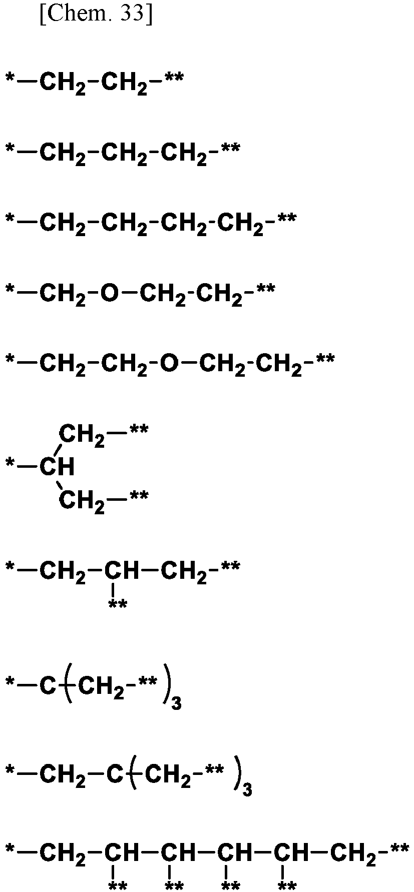

Herein * designates a point of attachment to N and ** designates a point of attachment to X².

In the formula (2), X² is independently a monovalent organic group containing an acryloyl or α-substituted acryloyl group. At least one acryloyl or α-substituted acryloyl group is contained per molecule on the average.

X² preferably has a structure of the following formula.

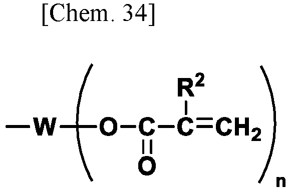

Herein R² is independently hydrogen, fluorine, methyl or trifluoromethyl, W is a single bond, or a di- or trivalent hydrocarbon group which may contain at least one bond selected from ether bond, ester bond and urethane bond, and n is 1 or 2.

In the above formula, W is a single bond, or a di- or trivalent hydrocarbon group which may contain at least one bond selected from ether bond, ester bond and urethane bond. Examples of the di- or trivalent hydrocarbon group include groups having the following formulae.

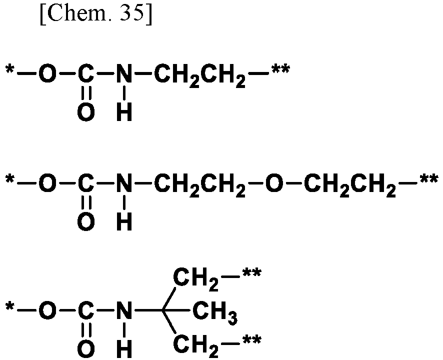

Herein * designates a point of attachment to Y² in formula (2) and ** designates a point of attachment to the oxygen atom.

More preferred structures of X² are shown below.

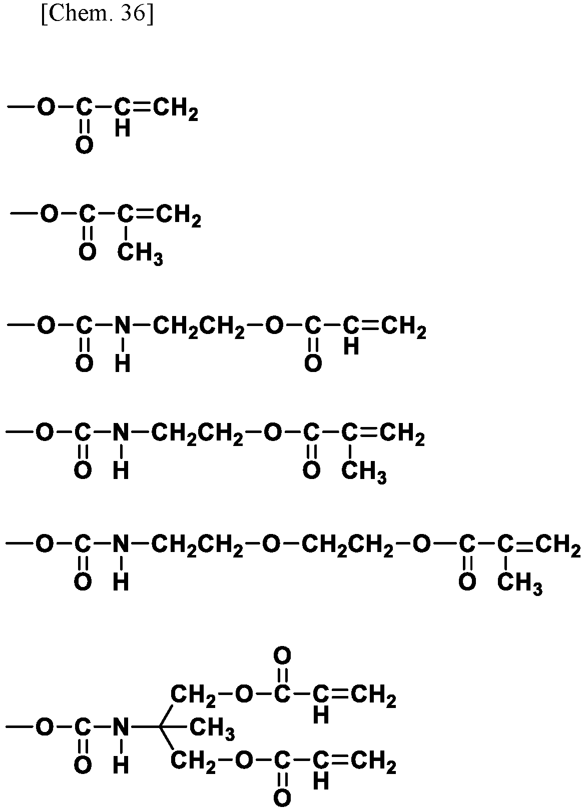

In the formula (2), V² is hydrogen, fluorine or a monovalent group of the formula: -C(=O)-NR¹ₐ[Y²(X²)_{b'}]₂₋ₐ, preferably a monovalent group of the formula: -C(=O)-NR¹ₐ[Y²(X²)_{b'}]₂₋ₐ.

When V² is a monovalent group of the formula: -C(=O)-NR¹ₐ[Y²(X²)_{b'}]₂₋ₐ, which indicates that at least two acryloyl or α-substituted acryloyl groups are contained per molecule on the average, a composition comprising the relevant compound forms a reticulate network and cures into a cured product having satisfactory dynamic properties. It is noted that when V² is a monovalent group of the formula: -C(=O)-NR¹ₐ[Y²(X²)_{b'}]₂₋ₐ, a plurality of R¹, Y², X², b', and a in formula (2) may be identical or different.

In the formula (2), a is 0 or 1, preferably 1.

In the formula (2), b' is an integer of 1 to 10, preferably 1 or 2.

Preferred examples of the fluoropolyether-containing acrylic compound having the formula (2) include compounds of the following formulae.

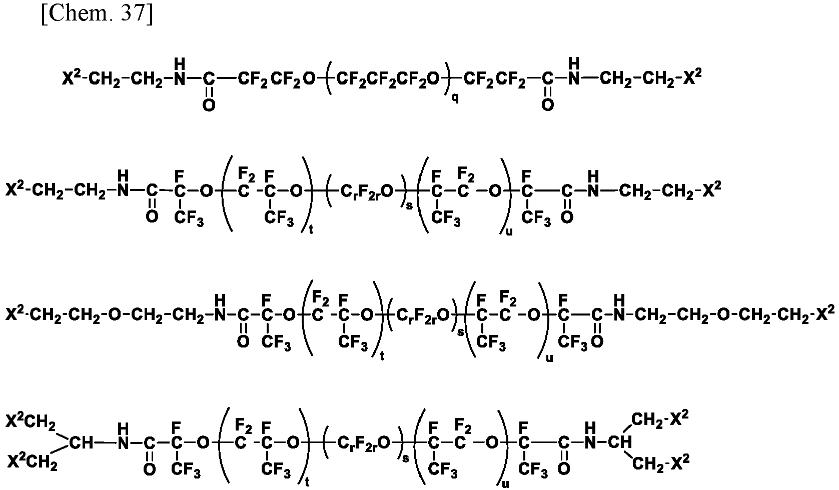

Herein X², q, r, s, t and u are as defined above.

More preferred examples of the fluoropolyether-containing acrylic compound having the formula (2) include compounds of the following formulae.

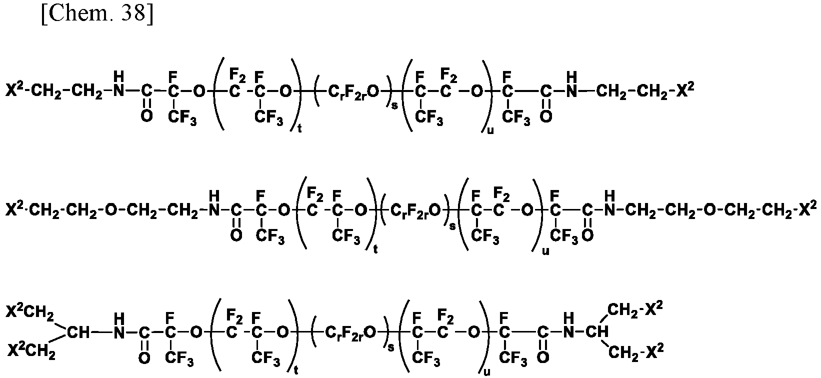

Herein X², r, s, t and u are as defined above.

One exemplary fluoropolyether-containing acrylic compound having the formula (1) as component (A), specifically one exemplary fluoropolyether-containing acrylic compound having the formula (2) wherein V² is a monovalent group of the formula: -C(=O)-NR¹ₐ[Y²(X²)_{b'}]₂₋ₐ is a fluoropolyether-containing acrylic compound having the general formula (3):

Rf²[C(=O)-NR¹ₐ[Y²(X²)_{b'}]₂₋ₐ]₂ (3)

wherein Rf², R¹, Y², X², a and b' are as defined above. This fluoropolyether-containing acrylic compound having the formula (3) is preferably synthesized, for example, by effecting amidation reaction of a fluoropolyether-containing compound containing acid halide or ester at the end of the molecular chain, having the general formula (4):

Rf²[C(=O)-X³]₂ (4)

wherein Rf² is as defined above, and X³ is halogen or unsubstituted or fluorine-substituted alkoxy group with an aminoalcohol compound having the general formula (5):

H-NR¹ₐ[Y²(OH)_{b'}]₂₋ₐ (5)

wherein R¹, Y², a and b' are as defined above, to form an intermediate, fluoropolyether-containing alcohol compound.

In the formula (4), X³ is halogen or an unsubstituted or fluorine-substituted alkoxy group of preferably 1 to 10 carbon atoms, more preferably 1 to 6 carbon atoms. Examples include halogen atoms such as fluorine, chlorine and bromine, alkoxy groups such as methoxy, ethoxy, propoxy, isopropoxy, butoxy, isobutoxy, tert-butoxy, hexyloxy, and octyloxy, and fluorine-substituted alkoxy groups obtained by substituting fluorine for some or all of the hydrogen atoms in the foregoing groups, such as trifluoromethoxy, 2,2,2-trifluoroethoxy, and 1,1,1,3,3,3-hexafluoroisopropoxy.

Examples of the fluoropolyether-containing compound containing acid halide or ester at the molecular end, having the formula (4) are shown below.

Rf²[C(=O)-Cl]₂

Rf²[C(=O)-F]₂

Rf²[C(=O)-O-CH₃]₂

Rf²[C(=O)-O-C₂H₅]₂

Rf²[C(=O)-O-C₃H₇]₂

Rf²[C(=O)-O-C₄H₉]₂

Rf²[C(=O)-O-C₅H₁₁]₂

Rf²[C(=O)-O-C₆H₁₃]₂

Rf²[C(=O)-O-CF₃]₂

Rf²[C(=O)-O-C₂F₅]₂

Rf²[C(=O)-O-CH(CF₃)₂]₂

Herein Rf² is as defined above.

Examples of the aminoalcohol compound having the formula (5) are shown below.

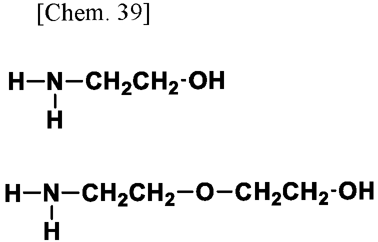

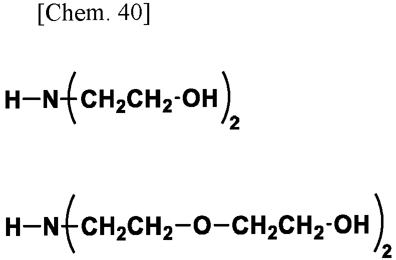

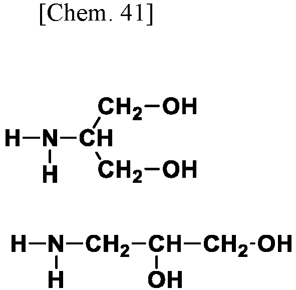

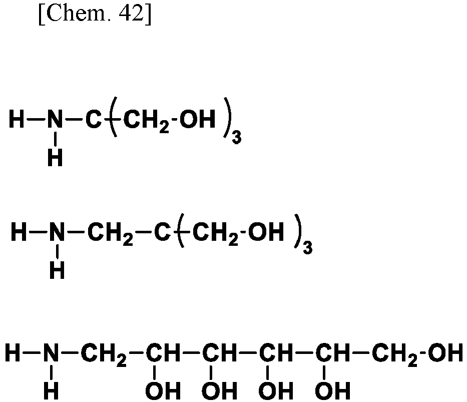

In the reaction, the fluoropolyether-containing compound containing acid halide or ester at the molecular end, having the formula (4) and the aminoalcohol compound having the formula (5) are desirably used in such a ratio that the molar amount of the aminoalcohol compound having the formula (5) may be 1 to 12 times, especially 1.2 to 6 times greater than the total moles of acid halide or ester groups in the fluoropolyether-containing compound containing acid halide or ester at the molecular end, having the formula (4). If the amount of the aminoalcohol compound having the formula (5) is less than the range, it is sometimes difficult to obtain the desired fluoropolyether-containing alcohol compound.

The amidation reaction is desirably carried out by mixing the fluoropolyether-containing compound containing acid halide or ester at the molecular end, having the formula (4) with the aminoalcohol compound having the formula (5), and effecting reaction at a temperature of 0 to 100°C, preferably 0 to 80°C, for 1 minute to 48 hours, preferably 10 minutes to 12 hours. At too low a temperature, the reaction may sometimes stop before running to a full extent. At too high a temperature, undesired side reactions or decomposition of the reactants can occur.

Although the amidation reaction can be carried out in a solventless system, the reaction system may be diluted with a solvent if necessary. Although any organic solvents commonly used in the art may be utilized as the diluent solvent, a solvent which has a boiling point above the reaction temperature and does not inhibit the reaction is preferred. Preferred examples of the solvent include partially fluorine-modified solvents, for instance, fluorine-modified aromatic hydrocarbon solvents such as m-xylene hexafluoride and benzotrifluoride, and fluorine-modified ether solvents such as methyl perfluorobutyl ether. Inter alia, m-xylene hexafluoride is especially preferred.

When used, the amount of the solvent added is preferably 5 to 2,000 parts by weight, more preferably 50 to 500 parts by weight per 100 parts by weight of the fluoropolyether-containing compound containing acid halide or ester at the molecular end, having the formula (4). Outside the range, a smaller amount of the solvent exerts a weak dilution effect whereas a larger amount provides too high a degree of dilution, inviting a decline of reaction rate.

At the end of reaction, the unreacted aminoalcohol compound having the formula (5) and diluent solvent are preferably removed by any well-known methods such as vacuum distillation, extraction and adsorption.

By carrying out amidation reaction of the fluoropolyether-containing compound containing acid halide or ester at the molecular end, having the formula (4) with the aminoalcohol compound having the formula (5), there is obtained a fluoropolyether-containing alcohol compound having the general formula (6):

Rf²[C(=O)-NR¹ₐ[Y²(OH)_{b'}]₂₋ₐ]₂ (6)

wherein Rf², R¹, Y², a and b' are as defined above.

Examples of the fluoropolyether-containing alcohol compound having the formula (6) are shown below.

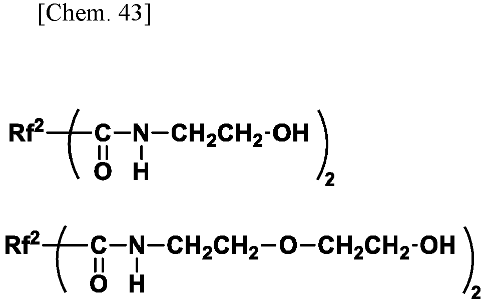

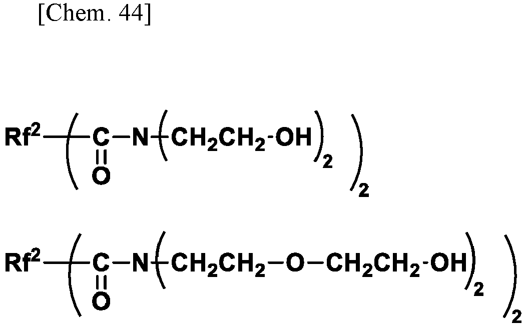

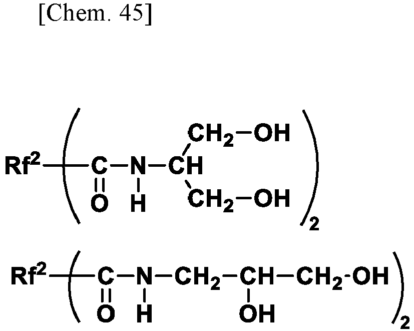

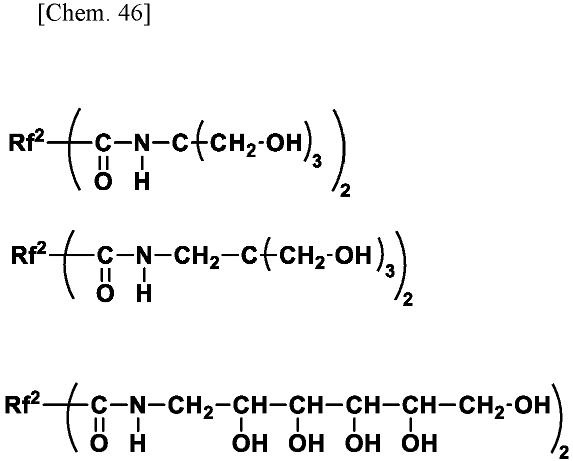

Herein Rf² is as defined above.

Next, a (meth)acryloyl group is introduced into the fluoropolyether-containing alcohol compound having the formula (6), obtaining the desired fluoropolyether-containing acrylic compound having the formula (3).

One exemplary method of introducing a (meth)acryloyl group into the fluoropolyether-containing alcohol compound having the formula (6) is a method of reacting the fluoropolyether-containing alcohol compound having the formula (6) with an isocyanate compound having a (meth)acryloyl group.

Examples of the isocyanate compound having a (meth)acryloyl group are shown below.

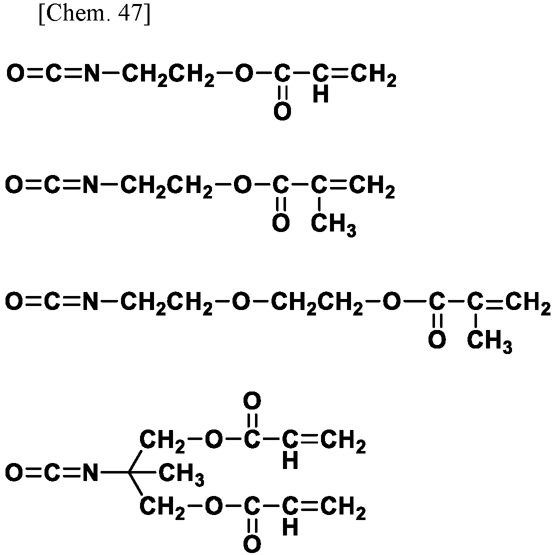

The isocyanate compound having a (meth)acryloyl group may be fed in an amount which is at least equimolar to the total of hydroxy groups in the fluoropolyether-containing alcohol compound whereby all the hydroxy groups are reacted. However, it suffices that the isocyanate compound having a (meth)acryloyl group is fed in such an amount as to introduce on the average at least 1 mole of (meth)acryloyl group per mole of the fluoropolyether-containing alcohol compound. It is also acceptable that hydroxy groups remain in excess such that no isocyanate compound having a (meth)acryloyl group is left unreacted. Specifically, provided that the amount of the fluoropolyether-containing alcohol compound in the reaction system is "x" mol and the total amount of hydroxy group in the fluoropolyether-containing alcohol compound is "y" mol, the amount of the isocyanate compound having a (meth)acryloyl group is desirably from x mol to 2y mol, more desirably from x mol and 0.6y mol to 1.4y mol. If the amount is too small, there is a strong possibility that the fluoropolyether-containing alcohol compound having no (meth)acryloyl groups introduced at all is left behind. If the amount is too large, it is difficult to remove the unreacted isocyanate compound having a (meth)acryloyl group.

The reaction may be carried out after the system is diluted with a suitable solvent if necessary. Any solvents may be used as the diluent without particular limits as long as the solvents are inert to hydroxy groups in the fluoropolyether-containing alcohol compound and isocyanate groups in the isocyanate compound having a (meth)acryloyl group. Exemplary solvents include hydrocarbon solvents such as toluene, xylene and isooctane, ether solvents such as tetrahydrofuran (THF), diisopropyl ether, and dibutyl ether, ketone solvents such as acetone, methyl ethyl ketone, methyl butyl ketone, methyl isobutyl ketone, and cyclohexanone, fluorine-modified aromatic hydrocarbon solvents such as m-xylene hexafluoride, also known as hexafluoro-m-xylene, and benzotrifluoride, and fluorine-modified ether solvents such as methyl perfluorobutyl ether. The solvent may be removed at the end of reaction by a well-known method such as vacuum distillation.

Although the amount of the solvent used is not particularly limited, it is preferably up to 10 times the total weight of all reactants. A too much amount of the solvent may lead to a substantial decline of reaction rate.

During the reaction, a polymerization inhibitor may be added if necessary. Although the polymerization inhibitor is not particularly limited, a polymerization inhibitor commonly used for acrylic compounds may be selected. Exemplary inhibitors include hydroquinone, hydroquinone monomethyl ether, 4-tert-butyl catechol, and dibutyl hydroxytoluene.

The amount of the polymerization inhibitor used may be determined in accordance with reaction conditions, purifying conditions after reaction, and final use conditions and is not particularly limited. Most often, the amount is preferably 0.01 to 5,000 ppm, more preferably 0.1 to 500 ppm based on the total weight of all reactants.

In the reaction, a suitable catalyst may be added to accelerate the reaction rate. Examples of the catalyst include alkyltin ester compounds such as dibutyltin diacetate, dibutyltin dilaurate, dibutyltin dioctoate, dioctyltin diacetate, dioctyltin dilaurate, dioctyltin dioctate, and stannous dioctanoate; titanate esters or titanium chelate compounds such as tetraisopropoxytitanium, tetra-n-butoxytitanium, tetrakis(2-ethylhexoxy)titanium, also known as tetrakis(2-ethylhexyl) orthotitanate, dipropoxybis(acetylacetonato)titanium, and titanium isopropoxyoctylene glycol; zirconium tetraacetylacetonate, zirconium tributoxymonoacetylacetonate, zirconium monobutoxyacetylacetonate bis(ethyl acetoacetate), zirconium dibutoxybis(ethyl acetoacetate), zirconium tetraacetylacetonate, zirconium chelates, and bismuth carboxylate compounds. These compounds may be used alone or in admixture. In particular, titanium compounds and bismuth compounds are preferred from the aspects of toxicity and reactivity.

The reaction rate can be increased by adding the catalyst in an amount of 0.01 to 2% by weight, preferably 0.05 to 1% by weight of the total weight of all reactants.

The reaction is carried out at a temperature of 0 to 120°C, preferably 10 to 100°C, for 1 minute to 500 hours, preferably 10 minutes to 48 hours. At too low a temperature, the reaction rate may become too slow. At too high a temperature, polymerization of (meth)acryloyl groups can occur as side reaction.

At the end of reaction, the unreacted isocyanate compound and solvent are removed by any suitable methods such as distillation, adsorption, filtration, and washing. In this way, the fluoropolyether-containing acrylic compound having the formula (3) is obtained.

In stopping the reaction, an alcohol compound such as methanol or ethanol may be added to the reaction system to form a urethane bond with the unreacted isocyanate compound. The urethane (meth)acrylate thus formed can be removed by the same method as the unreacted isocyanate compound although the reaction product may be used without removing the urethane (meth)acrylate.

Another method of introducing a (meth)acryloyl group into the fluoropolyether-containing alcohol compound having the formula (6) is a method of reacting the fluoropolyether-containing alcohol compound having the formula (6) with a (meth)acrylic halide to form an ester.

The following compounds are exemplary of the (meth)acrylic halide. 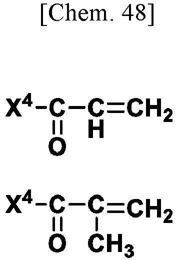 Herein X⁴ is a halogen such as fluorine, chlorine or bromine.

Inter alia, acrylic chloride and methacrylic chloride are preferred.

The (meth)acrylic halide is desirably fed in an amount which is at least equimolar to the total of hydroxy groups in the fluoropolyether-containing alcohol compound whereby all the hydroxy groups are reacted. Specifically, the reaction is desirably carried out by using the (meth)acrylic halide in a molar amount of 1 to 6 times, especially 1.2 to 4 times greater than the molar amount of hydroxy groups in the fluoropolyether-containing alcohol compound in the reaction system. If the amount of the (meth)acrylic halide is too small, there is a strong possibility that the fluoropolyether-containing alcohol compound having no (meth)acryloyl groups introduced at all is left behind.

In the ester-forming step of reacting the fluoropolyether-containing alcohol compound with a (meth)acrylic halide, an acid acceptor is preferably used. The fluoropolyether-containing alcohol compound having the formula (6), the (meth)acrylic halide and the acid acceptor are mixed and stirred. For example, triethylamine, pyridine and urea may be used as the acid acceptor.

The amount of the acid acceptor used is desirably 0.9 to 3 times the moles of the (meth)acrylic halide. If the amount is too small, more acid is left non-trapped. If the amount is too large, it is difficult to remove the excess of acid acceptor.

The reaction may be carried out after the system is diluted with a suitable solvent if necessary. Any solvents may be used as the diluent without particular limits as long as the solvents are inert to hydroxy groups in the fluoropolyether-containing alcohol compound and halogen in the (meth)acrylic halide. Exemplary solvents include hydrocarbon solvents such as toluene, xylene and isooctane, ether solvents such as tetrahydrofuran (THF), diisopropyl ether, and dibutyl ether, ketone solvents such as acetone, methyl ethyl ketone, methyl butyl ketone, methyl isobutyl ketone, and cyclohexanone, fluorine-modified aromatic hydrocarbon solvents such as m-xylene hexafluoride, also known as hexafluoro-m-xylene, and benzotrifluoride, and fluorine-modified ether solvents such as methyl perfluorobutyl ether. The solvent may be removed at the end of reaction by a well-known method such as vacuum distillation.

Although the amount of the solvent used is not particularly limited, it is preferably up to 10 times the total weight of all reactants. A too large amount of the solvent may lead to a substantial decline of reaction rate.

The reaction is carried out at a temperature of 0 to 120°C, preferably 10 to 100°C, for 1 minute to 500 hours, preferably 10 minutes to 48 hours. At too low a temperature, the reaction rate may become too slow. At too high a temperature, polymerization of (meth)acryloyl groups can occur as side reaction.

At the end of reaction, the unreacted (meth)acrylic halide and solvent are removed by any suitable methods such as distillation, adsorption, filtration, and washing. The fluoropolyether-containing acrylic compound having the formula (3) is thus obtained.

The thus obtained fluoropolyether-containing acrylic compound is free of a volatile organic compound or solvent. Notably, the fluoropolyether-containing acrylic compound may be used alone or in admixture.

The second essential component of the fluorinated, actinic energy ray-curable composition is (B) an acrylic compound containing one or two acryloyl or α-substituted acryloyl groups per molecule, exclusive of component (A), the acrylic compound having a viscosity of up to 5,000 mPa s at 23°C. The acrylic compound (B) may contain oxygen and nitrogen other than the acrylic structure, specifically ether bond, urethane bond, isocyanate group or hydroxy group.

Component (B) should have a viscosity at 23°C of up to 5,000 mPa·s, preferably 0.4 to 2,000 mPa·s, in view of dissolution in component (A). If the viscosity at 23°C exceeds 5,000 mPa·s, component (B) is difficult to mix with component (A) and to handle. As used herein, the viscosity is measured by a rotational viscometer, e.g., BL, GH, BS, cone-plate type viscometer, or rheometer (the same holds true, hereinafter).

Of component (B), preferred examples of the compound having one (meth)acryloyl group per molecule include compounds having the general formula (7):

CH₂=C(R⁵)C(=O)OR⁴ (7)

wherein R⁴ is a C₁-C₂₀ monovalent hydrocarbon group which may contain a urethane bond, ether bond, isocyanate group or hydroxy group and in which some carbon-bonded hydrogen may be substituted by fluorine, and R⁵ is hydrogen, methyl, fluorine or a C₁-C₆ fluoroalkyl group.

In the formula (7), R⁴ is a C₁-C₂₀ monovalent hydrocarbon group which may contain a urethane bond, ether bond, isocyanate group or hydroxy group. Preference is given to C₁-C₂₀, especially C₁-C₁₀ alkyl groups, C₆-C₂₀, especially C₆-C₁₀ aryl groups and C₇-C₂₀, especially C₇-C₁₀ aralkyl groups. The hydrocarbon group may be branched or cyclic and contain an aliphatic unsaturated (or double) bond, urethane bond, ether bond, isocyanate group, or hydroxy group. Examples of group R⁴ include methyl, ethyl, propyl, butyl, isobutyl, hexyl, cyclohexyl, octyl, 2-ethylhexyl, isodecyl, tridecyl, isostearyl, phenyl, benzyl, isobomyl, dicyclopentanyl, dicyclopentenyl, furfuryl, tetrahydrofurfuryl, tetrahydropyranyl, 2-(2-ethoxyethoxy)ethyl, -CH₂CH₂-OH, -CH₂CH(CH₃)-OH, -CH₂CH₂CH₂-OH, -CH₂CH₂CH₂CH₂-OH, -CH₂CH₂CH₂CH₂CH₂-OH, -CH₂CH₂CH₂CH₂CH₂CH₂-OH, 4-hydroxycyclohexyl, and -CH₂CH₂-NCO.

In the group R⁴, some carbon-bonded hydrogen may be substituted by fluorine.

In the formula (7), R⁵ is hydrogen, methyl, fluorine, or a C₁-C₆ fluoroalkyl group such as trifluoromethyl, trifluoropropyl or nonafluorobutyl, with hydrogen, methyl, fluorine and trifluoromethyl being preferred.

Examples of the compound having the formula (7) include methyl (meth)acrylate, ethyl (meth)acrylate, propyl (meth)acrylate, n-butyl (meth)acrylate, isobutyl (meth)acrylate, hexyl (meth)acrylate, n-octyl (meth)acrylate, 2-ethylhexyl (meth)acrylate, isodecyl (meth)acrylate, tridecyl (meth)acrylate, isostearyl (meth)acrylate, 2-(2-ethoxyethoxy)ethyl (meth)acrylate, benzyl (meth)acrylate, 2-hydroxyethyl (meth)acrylate, 2-hydroxypropyl (meth)acrylate, 3-hydroxypropyl (meth)acrylate, 4-hydroxybutyl (meth)acrylate, 5-hydroxypentyl (meth)acrylate, 6-hydroxyhexyl (meth)acrylate, 4-hydroxycylohexyl (meth)acrylate, tetrahydrofurfuryl (meth)acrylate, isobornyl (meth)acrylate, phenoxyethyl (meth)acrylate, and neopentyl glycol (meth)acrylate benzoate.

Examples of the compound having the formula (7) wherein R⁴ is a monovalent hydrocarbon group in which some carbon-bonded hydrogen is substituted by fluorine include ethyl 2-fluoro(meth)acrylate, phenyl 2-fluoro(meth)acrylate, 3-fluoropropyl (meth)acrylate, 2,2-difluoroethyl (meth)acrylate, methyl 3,3-difluoro(meth)acrylate, 2-fluoroethyl (meth)acrylate, methyl 2-fluoro(meth)acrylate, 1H,1H-perfluorononyl (meth)acrylate, methyl 2,3,3-trifluoro(meth)acrylate, pentafluorobenzyl (meth)acrylate, pentafluorophenyl (meth)acrylate, tert-butyl 2-fluoro(meth)acrylate, methyl 2-fluoro(meth)acrylate, hexafluoroisopropyl (meth)acrylate, methyl 3-(4-fluorophenyl)-(meth)acrylate, 3-(trifluoromethyl)benzyl (meth)acrylate, 1H,1H-perfluorooctyl (meth)acrylate, 2,2,2-trifluoroethyl (meth)acrylate, heptafluoroisopropyl (meth)acrylate, 2-(perfluorobutyl)ethyl (meth)acrylate, 2-(perfluorohexyl)ethyl (meth)acrylate, 1H,1H-pentafluoropropyl (meth)acrylate, 2,2,2-trifluoroethyl 2-fluoro(meth)acrylate, methyl 3-(2,4-difluorophenyl)(meth)acrylate, ethyl (2E)-3-(4-fluorophenyl)(meth)acrylate, 2,2,2-trichloroethyl 2-fluoro(meth)acrylate, 1H,1H-pentafluorobutyl 2-fluoro(meth)acrylate, methyl 2-(trifluoromethyl)(meth)acrylate, 2,2,3,3-tetrafluoropropyl (meth)acrylate, tert-butyl 2-(trifluoromethyl)(meth)acrylate, 1H,1H,5H-octafluoropentyl (meth)acrylate, (E)-methyl 3-(2,5-difluorophenyl)(meth)acrylate, (E)-methyl 3-(3,5-difluorophenyl)(meth)acrylate, 1H,1H,7H-dodecafluorophenyl (meth)acrylate, and 2,2,3,4,4,4-hexafluorobutyl (meth)acrylate. Some compounds are commercially available, for example, CHEMINOX FAAC-4, CHEMINOX FAAC-6, CHEMINOX FAMAC-4, and CHEMINOX FAMAC-6 (Unimatec Chemicals Co., Ltd.), Viscoat 3F, Viscoat 4F, Viscoat 8F, Viscoat 8FM, and Viscoat 13F (Osaka Organic Chemical Industry Ltd.).

Compounds not corresponding to the formula (7), for example, acrylate compounds having repeating unit structures of ethylene oxide, propylene oxide, tetramethylene oxide or lactone and terminated with various alkoxy groups, e.g., methoxypolyethylene glycol (meth)acrylate, phenoxy polyethylene glycol (meth)acrylate, methoxy polypropylene glycol (meth)acrylate, and (meth)acrylic compounds commercially available under the trade name of nonylphenol EO-adduct acrylate may also be used as long as they have a viscosity at 23°C of up to 5,000 mPa s.

Of component (B), preferred examples of the compound having two (meth)acryloyl groups per molecule include compounds having the general formula (8):

CH₂=C(R⁷)C(=O)O-R⁶-O(O=)C(R⁷)C=CH₂ (8)

wherein R⁶ is a C₁-C₂₀ divalent hydrocarbon group which may contain a urethane bond, ether bond, isocyanate group or hydroxy group and in which some carbon-bonded hydrogen may be substituted by fluorine, and R⁷ is each independently hydrogen, methyl, fluorine or a C₁-C₆ fluoroalkyl group.

In the formula (8), R⁶ is a C₁-C₂₀ divalent hydrocarbon group which may contain a urethane bond, ether bond, isocyanate group or hydroxy group. Preference is given to C₁-C₂₀, especially C₁-C₁₀ alkylene groups, C₆-C₂₀, especially C₆-C₁₀ arylene groups and C₇-C₂₀, especially C₇-C₁₀ aralkylene groups. The hydrocarbon group may be branched or cyclic and contain an aliphatic unsaturated (or double) bond, urethane bond, ether bond, isocyanate group, or hydroxy group. Examples of group R⁶ include methylene, ethylene, propylene (or trimethylene, methylethylene), butylene (or tetramethylene, methylpropylene), hexylene (or hexamethylene), cyclohexylene, octamethylene, nonamethylene, decamethylene, -CH₂CH₂-O-CH₂CH₂-, -C₃H₆-O-C₃H₆-, phenylene, dicyclopentanylene, dicyclopentenylene, furfurylene, tetrahydrofurfurylene, and tetrahydropyranylene.

In the group R⁶, some carbon-bonded hydrogen may be substituted by fluorine.

R⁷ is hydrogen, methyl, fluorine, or a C₁-C₆ fluoroalkyl group such as trifluoromethyl, trifluoropropyl or nonafluorobutyl, with hydrogen, methyl, fluorine and trifluoromethyl being preferred.

Examples of the compound having the formula (8) include 1,3-butanediol di(meth)acrylate, 1,4-butanediol di(meth)acrylate, dipropylene glycol di(meth)acrylate, tripropylene glycol di(meth)acrylate, 1,6-hexanediol di(meth)acrylate, diethylene glycol di(meth)acrylate, ethylene glycol di(meth)acrylate, propylene glycol di(meth)acrylate, nonanediol di(meth)acrylate, and 10-decanediol di(meth)acrylate.

As component (B), compounds having a fluoroalkyl group and one or two acryloyl or α-substituted acryloyl groups are more preferred. A compound containing a fluoroalkyl group as component (B) is more compatible with the fluoropolyether-containing acrylic compound as component (A) and hence, a cured product becomes more transparent.

Examples of the compound include those of the following formulae.

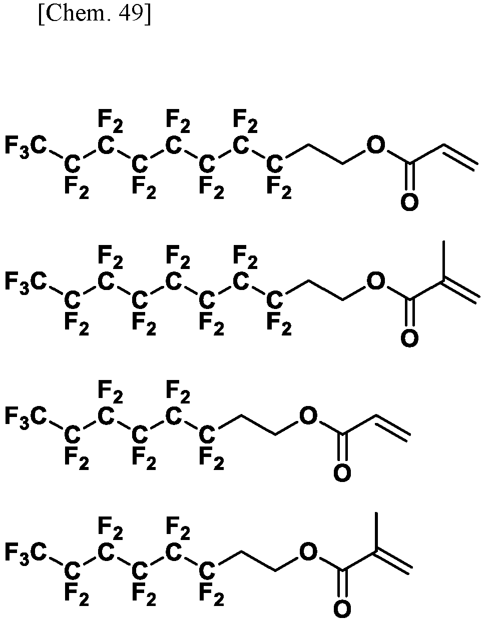

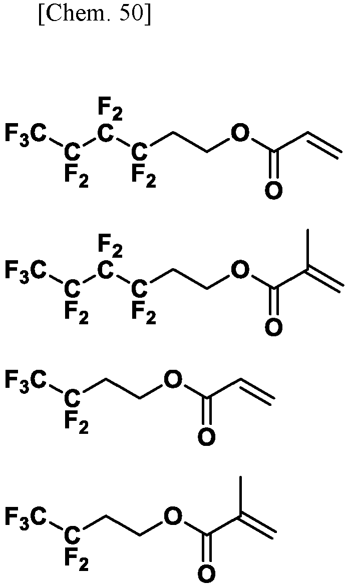

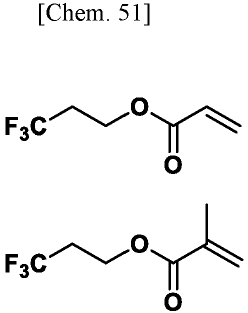

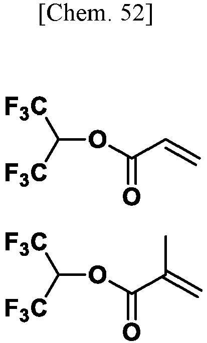

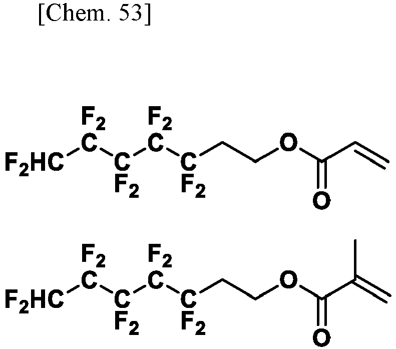

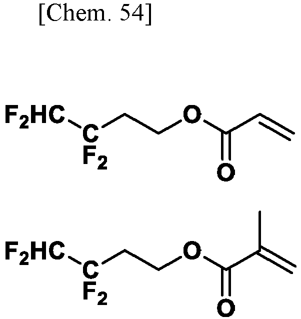

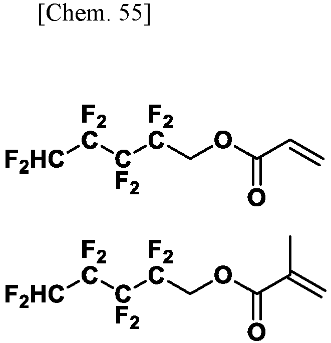

As component (B), compounds having at least one C₁-C₈ perfluoroalkyl group and one or two acryloyl or α-substituted acryloyl groups are especially preferred.

Examples of the compound include those of the following formulae.

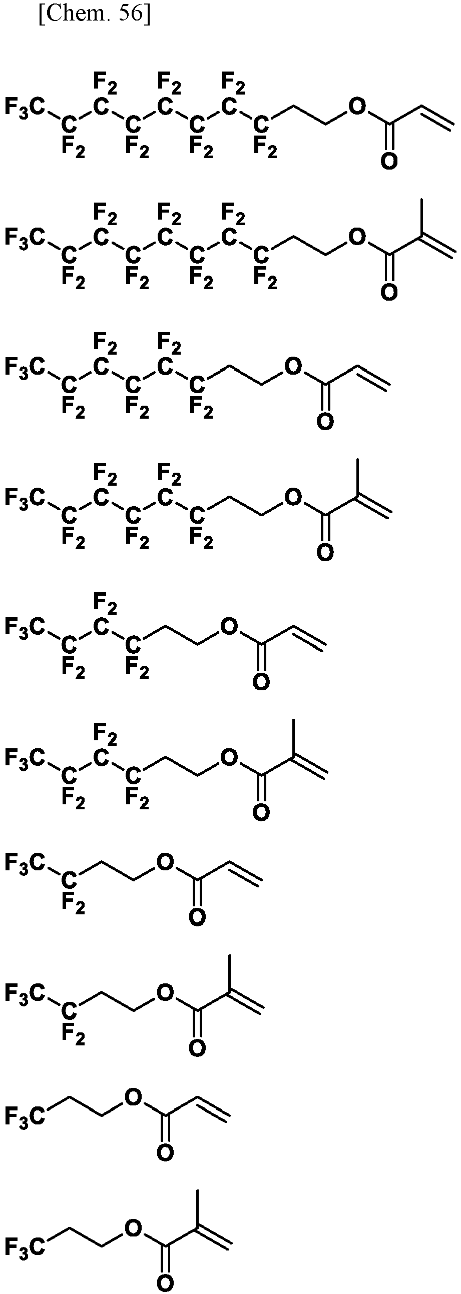

Component (B) may be a single compound or a mixture of two or more compounds as defined above. In the case of a mixture, the total amount of compounds corresponding to component (B) may be computed as the amount of component (B). The compound corresponding to component (B) may be synthesized by any well-known method, whereas the compound is commercially available from reagent manufacturers and may be used as purchased.

The amount of component (B) is 0.1 to 300 parts by weight, preferably 1 to 100 parts by weight per 100 parts by weight of component (A). An amount of less than 0.1 part by weight makes it difficult to adjust the viscosity of a fluorinated, actinic energy ray-curable composition to a sufficient range to provide ease of handling. An amount in excess of 300 parts by weight makes it difficult for a fluorinated, actinic energy ray-curable composition to exhibit a low refractive index.

The third essential component of the fluorinated, actinic energy ray-curable composition is (C) a photopolymerization initiator. The photopolymerization initiator as component (C) is not particularly limited as long as it helps the acrylic compound to cure upon exposure to actinic energy ray. Examples include acetophenone, benzophenone, 2-hydroxy-2-methylpropiophenone, 2,2-dimethoxy-1,2-diphenylethan-1-one, 1-hydroxycyclohexyl phenyl ketone, 2-hydroxy-2-methyl-1-phenylpropan-1-one, 1-[4-(2-hydroxyethoxy)phenyl]-2-hydroxy-2-methyl-1-propan-1-one, 2-methyl-1-(4-methylthiophenyl)-2-morpholinopropan-1-one, 2-benzyl-2-dimethylamino-1-(4-morpholinophenyl)butan-1-one, 2-(dimethylamino)-2-[(4-methylphenyl)methyl]-1-[4-(4-morpholinyl)phenyl]-1-butanone, 2,4,6-trimethylbenzoyl-diphenyl-phosphine oxide, bis(2,4,6-trimethylbenzoyl)-phenylphosphine oxide, 1,2-octanedione-1-[4-(phenylthio)-2-(o-benzoyloxime)], ethenone-1-[9-ethyl-6-(2-methylbenzoyl)-9H-carbazol-3-yl]-1-(O-acetyloxime), and 2-hydroxy-1-{4-[4-(2-hydroxy-2-methylpropionyl)benzyl]phenyl}-2-methylpropan-1-one, which may be used alone or in admixture. Of these, alkylphenone and acylphosphine oxide-based photopolymerization initiators are preferred from the aspect of photocure.

The photopolymerization initiator free of fluorine in its structure is more preferred as component (C). The photopolymerization initiator free of fluorine in its structure is more readily available. Using various commercially available photopolymerization initiators, the fluorinated, actinic energy ray-curable composition can be controlled in absorption wavelength and curing properties.

The amount of component (C) is 0.01 to 20 parts by weight, preferably 0.1 to 6 parts by weight per 100 parts by weight of component (A). An amount below the range leads to a lowering of cure whereas an amount beyond the range substantially affects the cured properties.

In one preferred embodiment, the fluorinated, actinic energy ray-curable composition is a composition which is free of a volatile organic compound not having an acryloyl-reactive group (especially non-reactive volatile organic compound (or solvent) not containing an acryloyl group in the molecule), that is, a solventless, fluorinated, actinic energy ray-curable composition. When the composition does not contain a volatile organic compound not having an acryloyl-reactive group, it is unnecessary to remove the solvent by heating prior to the formation of a cured product. This leads to an energy saving of the process.

In the fluorinated, actinic energy ray-curable composition, there may be additionally blended actinic energy ray reactive compounds other than acrylic compounds, such as thiol and maleimide compounds, polymerization inhibitors, antistatic agents, defoamers, viscosity modifiers, photostabilizers, thermal stabilizers, antioxidants, surfactants, coloring agents, and polymeric and inorganic fillers. As the additives, any well-known compounds may be used without limits on their structure as long as the benefits of the invention are not impaired.

The fluorinated, actinic energy ray-curable composition may be prepared by any prior art well-known methods. For example, the composition is prepared by blending predetermined amounts of components (A) to (C), and optionally other components, and mixing them on a mixing means such as a mixer, preferably at a temperature of 10 to 70°C for 0.1 to 5 hours. Preferably the composition is prepared in a light-shielded environment.

The fluorinated, actinic energy ray-curable composition should have a viscosity at 23°C of 10 to 100,000 mPa·s, preferably 10 to 70,000 mPa·s, more preferably 10 to 40,000 mPa s. A viscosity in the range ensures that the curable composition is easy to handle or work. As used herein, ease of handling or working means that when the fluorinated, actinic energy ray-curable composition is handled or applied, the phenomenon that sagging or back transfer occurs due to a low viscosity during the coating or other step is unlikely to occur or the phenomenon that dispensing is difficult or leveling is retarded due to a high viscosity is unlikely to occur. In order that the composition have a viscosity at 23°C within the range, it suffices to properly adjust the ratio of component (A) having a relatively high viscosity and component (B) having a relatively low viscosity, which is convenient and preferable.

The fluorinated, actinic energy ray-curable composition should have a refractive index of up to 1.390, preferably up to 1.380, more preferably up to 1.370 at temperature 25°C and wavelength 589 nm. The composition having a refractive index in the range forms a cured product having a low refractive index which is useful in the optical part application. It is noted that refractive index is measured by a refractometer such as Abbe refractometer. In order that the composition have a refractive index of up to 1.390 at temperature 25°C and wavelength 589 nm, the fluoropolyether-containing acrylic compound as component (A) should have a divalent perfluoropolyether group composed of C₁-C₆ perfluoroalkylene groups and oxygen and having a Mn of 500 to 40,000.

Since the fluorinated, actinic energy ray-curable composition thus obtained contains an acryloyl or α-substituted acryloyl group as an actinic energy ray-curable group, it can be cured with actinic energy ray such as UV or EB. Since the composition contains a perfluoropolyether group as a group for providing a low refractive index and water-vapor resistance, it can form a transparent cured product having a low refractive index and satisfactory water-vapor resistance.

In a further aspect, the invention provides a cured product of the fluorinated, actinic energy ray-curable composition. The cured product is obtained by exposing the fluorinated, actinic energy ray-curable composition to light such as EB, UV or visible light. The light source is not particularly limited. Exemplary light sources include mercury lamps, black light lamps, metal halide lamps, sodium lamps, halogen lamps, xenon lamps, LED lamps, fluorescent lamps, sunlight, and EB emitting devices. The preferred light is ultraviolet (UV) light, and the preferred UV sources are mercury lamps, metal halide lamps, and LED lamps. The dose of light exposure is preferably 10 to 10,000 mJ/cm², more preferably 100 to 4,000 mJ/cm² from the aspect of cured properties. A too small dose may allow some components to be left uncured whereas a too large dose can degrade the cured product.

For the purpose of preventing oxygen cure inhibition, the atmosphere where UV is irradiated may be purged with an oxygen-molecule-free inert gas such as nitrogen, argon or carbon dioxide; or the cured product may be covered on its surface with a UV-transmissive protective layer having parting properties and UV is irradiated from above the protective layer. In the case of a UV-transmissive substrate, the cured product may be covered on its surface with a protective layer having parting properties, and UV is irradiated from the surface on the substrate side. Alternatively, the cured product and the substrate may be heated by any desired means such as infrared light or hot air drying furnace, prior to or during UV irradiation, in order to facilitate leveling of the cured product or polymerization of (meth)acryloyl groups in the cured product.

As described above, the cured product obtained by curing the fluorinated, actinic energy ray-curable composition exhibits a low refractive index and satisfactory water-vapor resistance.

The cured product should preferably have a refractive index of up to 1.400, preferably up to 1.390, more preferably up to 1.380 at temperature 25°C and wavelength 589 nm. The cured product having a refractive index in the range is useful in the optical part application. In order that the cured product have a refractive index of up to 1.400 under the specified conditions, the fluoropolyether-containing acrylic compound should have a divalent perfluoropolyether group composed of C₁-C₆ perfluoroalkylene groups and oxygen and having a Mn of 500 to 40,000.

Provided that the cured product has an initial hardness and a hardness after heating under conditions: 95°C and RH 100% for 12 hours, a change of hardness preferably falls within the range of initial hardness ± 10 points, more preferably initial hardness ± 7 points. As long as the hardness change falls within the range of initial hardness ± 10 points, the cured product has satisfactory water-vapor resistance. Specifically, the hardness may be measured according to JIS K6253. In order that the hardness change fall in the range, the divalent perfluoropolyether group Rf¹ or Rf² in component (A) should preferably have a structure of the following formula. 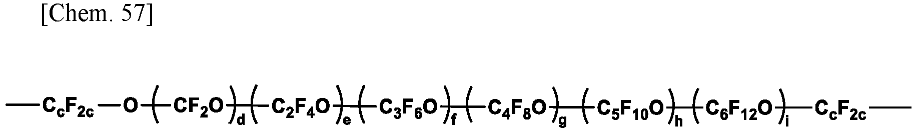 Herein c, d, e, f, g, h, i, and d+e+f+g+h+i are as defined above, each unit may be straight or branched, individual units in parentheses with subscripts d, e, f, g, h and i may be randomly arranged.

In a further aspect, the invention provides an article which is entirely or at least partially constructed by the cured product of the fluorinated, actinic energy ray-curable composition. As mentioned above, the article can be provided with a low refractive index and water-vapor resistance insofar as the fluorinated, actinic energy ray-curable composition is used.

The fluorinated, actinic energy ray-curable composition is advantageously used as optical parts, for example, antireflective agents, optical fiber-coating agents and lenses.

The method of coating the fluorinated, actinic energy ray-curable composition is not particularly limited. Any well-known coating methods may be used, for example, knife coating, roll coating, gravure coating, flow coating, dip coating, spray coating, spin coating, bar coating, and screen printing.

After coating, actinic energy ray is irradiated to the coating to cure it. As the actinic energy ray, any radiation such as EB, UV or visible light may be irradiated for curing. The light source is not particularly limited. Exemplary light sources include mercury lamps, black light lamps, metal halide lamps, sodium lamps, halogen lamps, xenon lamps, LED lamps, fluorescent lamps, sunlight, and EB emitting devices. The preferred light is UV light, and the preferred UV sources are mercury lamps, metal halide lamps, and LED lamps. The dose of light exposure is preferably 10 to 10,000 mJ/cm², more preferably 100 to 4,000 mJ/cm² from the aspect of cured properties. A too small dose may allow some components to be left uncured whereas a too large dose can degrade the cured product.

For the purpose of preventing oxygen cure inhibition, the atmosphere where UV is irradiated may be purged with an oxygen-molecule-free inert gas such as nitrogen, argon or carbon dioxide; or the cured product may be covered on its surface with a UV-transmissive protective layer having parting properties and UV is irradiated from above the protective layer. In the case of a UV-transmissive substrate, the cured product may be covered on its surface with a protective layer having parting properties, and UV is irradiated from the surface on the substrate side. Alternatively, the cured product and the substrate may be heated by any desired means such as infrared light or hot air drying furnace, prior to or during UV irradiation, in order to facilitate leveling of the cured product or polymerization of (meth)acryloyl groups in the cured product.

### EXAMPLES

Synthesis Examples, Examples, and Comparative Examples are given below for illustrating the invention, but the invention is not limited thereto. Herein, the number average molecular weight (Mn) of a perfluoropolyether group is computed from a characteristic peak intensity ratio of end structure to backbone structure of a fluoropolyether-containing acrylic compound as analyzed by ¹⁹F-NMR spectroscopy. The viscosity of component (B) is measured at 23°C according to JIS K7117.

### Synthesis of (A) fluoropolyether-containing acrylic compound

### [Synthesis Example 1] Synthesis of fluoropolyether-containing acrylic compound (A-1)

In a dry nitrogen atmosphere, a reactor was charged with 100 g (0.025 mol) of compound (I) whose average structure has the formula:

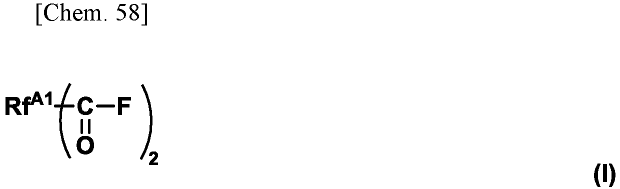

**Rf^{A1}:** **-CF₂CF₂O-(CF₂CF₂CF₂O)₂₅-CF₂CF₂-**

wherein Rf^{A1} has a Mn of approximately 4,400,
12.2 g (0.20 mol) of compound (i) having the formula: 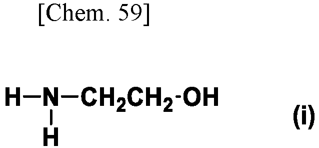
and 100 g of m-xylene hexafluoride, which were stirred at 60°C for 3 hours in dry nitrogen atmosphere. On IR analysis of the reaction solution, the disappearance of bands assigned to -C(=O)F bond was confirmed. The reaction solution was washed with water and distilled under reduced pressure, obtaining 92.3 g of fluoropolyether-containing alcohol compound (II) having the following structural formula.

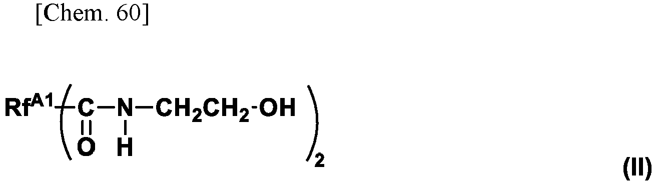

   **Rf^{A1}:** **-CF₂CF₂O-(CF₂CF₂CF₂O)₂₅-CF₂CF₂-**

Herein Rf^{A1} has a Mn of approximately 4,400.

In a reactor under dry air atmosphere, 50.0 g (hydroxy content 0.024 mol) of fluoropolyether-containing alcohol compound (II) obtained above was mixed with 50.0 g of THF and 3.6 g (0.024 mol) of methacryloyloxyethyl isocyanate, which was heated at 50°C. To the reactor, 0.15 g of bismuth carboxylate catalyst (XK-640 by Kusumoto Chemicals, Ltd.) was added, followed by 24 hours of stirring at 50°C. The heating step was followed by distillation under reduced pressure, obtaining 46.3 g of a highly viscous liquid substance. By ¹H-NMR and IR analyses, it was identified to be fluoropolyether-containing acrylic compound (A-1).

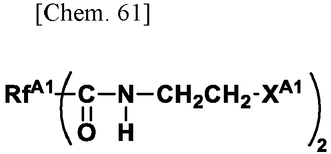

**Rf^{A1}: -CF₂CF₂O-(CF₂CF₂CF₂O)₂₅-CF₂CF₂-** **(A-1)**

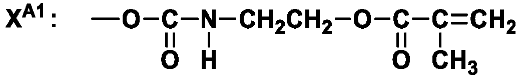

Herein Rf^{A1} has a Mn of approximately 4,400.

### [Synthesis Example 2] Synthesis of fluoropolyether-containing acrylic compound (A-2)

In a dry nitrogen atmosphere, a reactor was charged with 100 g (0.017 mol) of compound (III) whose average structure has the formula: 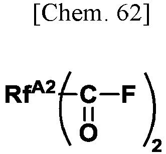 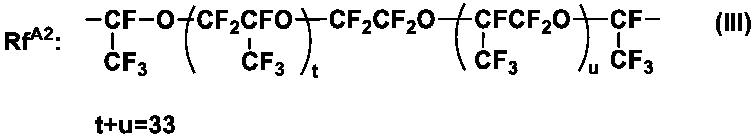
wherein Rf^{A2} has a Mn of approximately 5,800,
8.5 g (0.14 mol) of compound (i) having the formula: 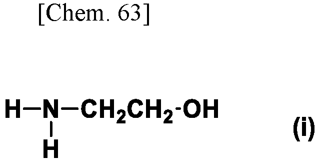
and 100 g of m-xylene hexafluoride, which were stirred at 65°C for 8 hours in dry nitrogen atmosphere. On IR analysis of the reaction solution, the disappearance of bands assigned to -C(=O)F bond was confirmed. The reaction solution was washed with water and distilled under reduced pressure, obtaining 94.4 g of fluoropolyether-containing alcohol compound (IV) having the following structural formula.

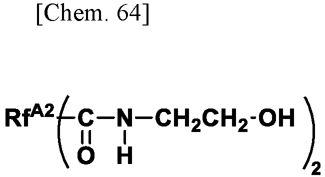

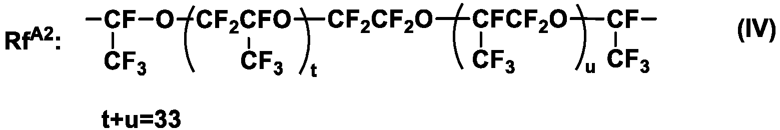

Herein Rf^{A2} has a Mn of approximately 5,800.

In a reactor under dry air atmosphere, 50.0 g (hydroxy content 0.017 mol) of fluoropolyether-containing alcohol compound (IV) obtained above was mixed with 50.0 g of m-xylene hexafluoride, 3.6 g (0.034 mol) of methacrylic chloride, and 4.4 g (0.043 mol) of triethylamine, which was stirred at 50°C for 24 hours. The heating step was followed by water washing and distillation under reduced pressure, obtaining 39.9 g of a highly viscous liquid substance. By ¹H-NMR and IR analyses, it was identified to be fluoropolyether-containing acrylic compound (A-2).

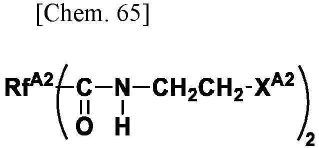

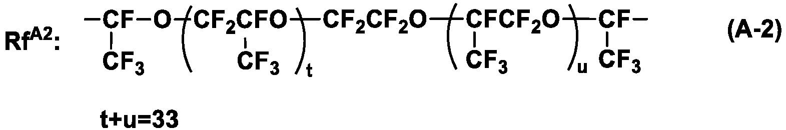

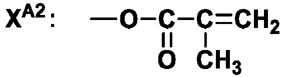

Herein Rf^{A2} has a Mn of approximately 5,800.

### [Synthesis Example 3] Synthesis of fluoropolyether-containing acrylic compound (A-3)

In a reactor under dry air atmosphere, 50.0 g (hydroxy content 0.017 mol) of fluoropolyether-containing alcohol compound (IV) prepared as in Synthesis Example 2 was mixed with 50.0 g of THF and 2.6 g (0.017 mol) of methacryloyloxyethyl isocyanate, which was heated at 50°C. To the reactor, 0.15 g of bismuth carboxylate catalyst (XK-640 by Kusumoto Chemicals, Ltd.) was added, followed by 24 hours of stirring at 50°C. The heating step was followed by distillation under reduced pressure, obtaining 48.3 g of a highly viscous liquid substance. By ¹H-NMR and IR analyses, it was identified to be fluoropolyether-containing acrylic compound (A-3).

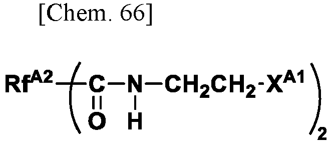

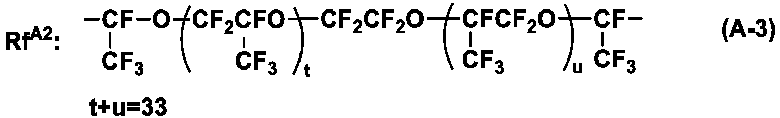

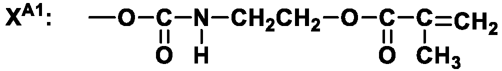

Herein Rf^{A2} has a Mn of approximately 5,800.

### [Synthesis Example 4] Synthesis of fluoropolyether-containing acrylic compound (A-4)

In a reactor under dry air atmosphere, 50.0 g (hydroxy content 0.017 mol) of fluoropolyether-containing alcohol compound (IV) prepared as in Synthesis Example 2 was mixed with 50.0 g of THF and 4.1 g (0.017 mol) of 1,1-(bisacryloyloxymethyl)ethyl isocyanate, which was heated at 50°C. To the reactor, 0.15 g of bismuth carboxylate catalyst (XK-640 by Kusumoto Chemicals, Ltd.) was added, followed by 24 hours of stirring at 50°C. The heating step was followed by distillation under reduced pressure, obtaining 37.3 g of a highly viscous liquid substance. By ¹H-NMR and IR analyses, it was identified to be fluoropolyether-containing acrylic compound (A-4).

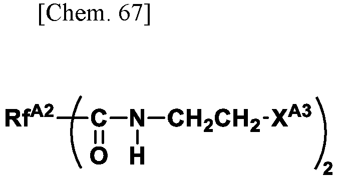

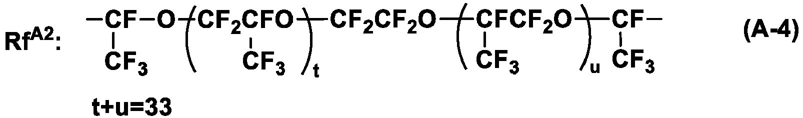

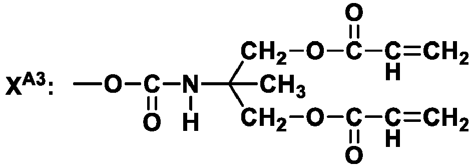

Herein Rf^{A2} has a Mn of approximately 5,800.

### [Synthesis Example 5] Synthesis of fluoropolyether-containing acrylic compound (A-5)

In a dry nitrogen atmosphere, a reactor was charged with 100 g (0.0063 mol) of compound (V) whose average structure has the formula: 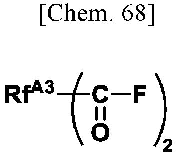 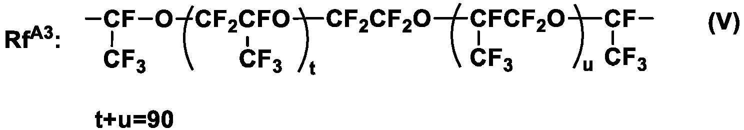 wherein Rf^{A3} has a Mn of approximately 15,300,
3.1 g (0.05 mol) of compound (i) having the formula: 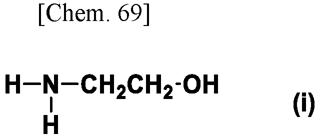 and 100 g of m-xylene hexafluoride, which were stirred at 65°C for 8 hours in dry nitrogen atmosphere. On IR analysis of the reaction solution, the disappearance of bands assigned to -C(=O)F bond was confirmed. The reaction solution was washed with water and distilled under reduced pressure, obtaining 73.2 g of fluoropolyether-containing alcohol compound (VI) having the following structural formula.

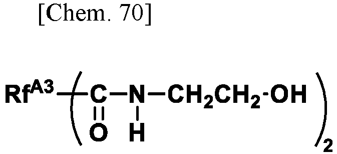

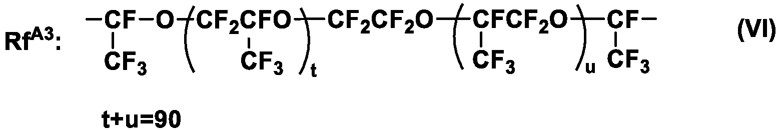

Herein Rf^{A3} has a Mn of approximately 15,300.

In a reactor under dry air atmosphere, 50.0 g (hydroxy content 0.0063 mol) of fluoropolyether-containing alcohol compound (VI) obtained above was mixed with 50.0 g of THF and 0.98 g (0.0063 mol) of methacryloyloxyethyl isocyanate, which was heated at 50°C. To the reactor, 0.15 g of bismuth carboxylate catalyst (XK-640 by Kusumoto Chemicals, Ltd.) was added, followed by 24 hours of stirring at 50°C. The heating step was followed by distillation under reduced pressure, obtaining 32.8 g of a highly viscous liquid substance. By ¹H-NMR and IR analyses, it was identified to be fluoropolyether-containing acrylic compound (A-5).

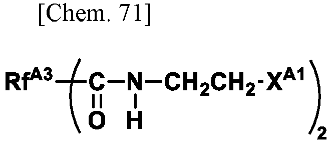

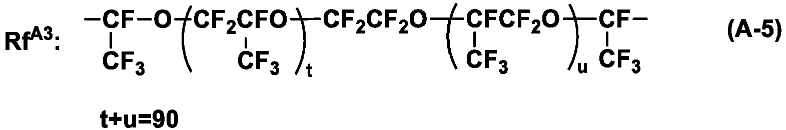

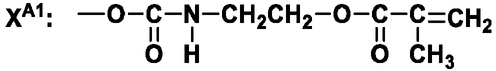

Herein Rf^{A3} has a Mn of approximately 15,300.

### [Synthesis Example 6] Synthesis of fluoropolyether-containing acrylic compound (A-6)

In a dry nitrogen atmosphere, a reactor was charged with 100 g (0.017 mol) of compound (III) whose average structure has the formula: 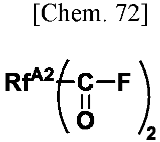 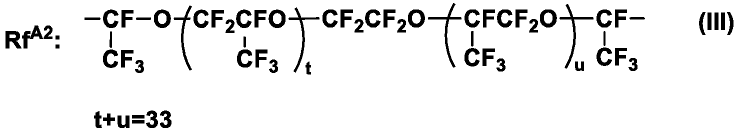 wherein Rf^{A2} has a Mn of approximately 5,800,
12.8 g (0.14 mol) of compound (ii) having the formula: 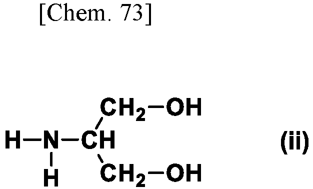 and 100 g of m-xylene hexafluoride, which were stirred at 65 °C for 8 hours in dry nitrogen atmosphere. On IR analysis of the reaction solution, the disappearance of bands assigned to -C(=O)F bond was confirmed. The reaction solution was washed with water and distilled under reduced pressure, obtaining 88.7 g of fluoropolyether-containing alcohol compound (VII) having the following structural formula.

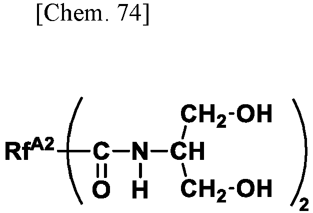

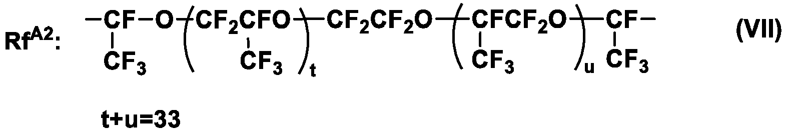

Herein Rf^{A2} has a Mn of approximately 5,800.

In a reactor under dry air atmosphere, 50.0 g (hydroxy content 0.033 mol) of fluoropolyether-containing alcohol compound (VII) obtained above was mixed with 50.0 g of THF and 5.1 g (0.033 mol) of methacryloyloxyethyl isocyanate, which was heated at 50°C. To the reactor, 0.15 g of bismuth carboxylate catalyst (XK-640 by Kusumoto Chemicals, Ltd.) was added, followed by 24 hours of stirring at 50°C. The heating step was followed by distillation under reduced pressure, obtaining 36.6 g of a highly viscous liquid substance. By ¹H-NMR and IR analyses, it was identified to be fluoropolyether-containing acrylic compound (A-6).

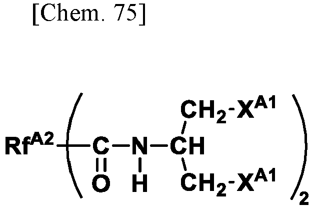

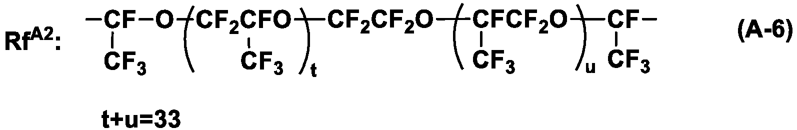

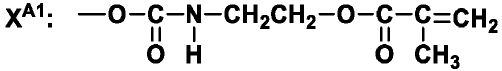

Herein Rf^{A2} has a Mn of approximately 5,800.

### [Synthesis Example 7] Synthesis of fluoropolyether-containing acrylic compound (A-7)

In a dry nitrogen atmosphere, a reactor was charged with 100 g (0.027 mol) of compound (VIII) whose average structure has the formula:

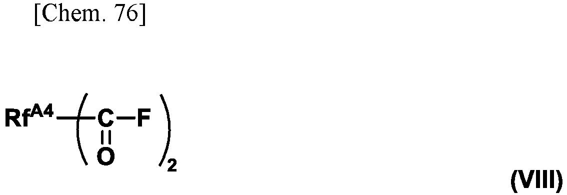

**Rf^{A4}: -CF₂O-(CF₂O)₂₀(C₂F₄O)₁₉-CF₂-**

wherein Rf^{A4} has a Mn of approximately 3,600 and individual units enclosed in parentheses in Rf^{A4} are randomly arranged,
13.4 g (0.22 mol) of compound (i) having the formula: 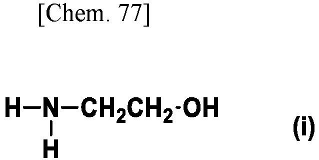
and 100 g of m-xylene hexafluoride, which were stirred at 65°C for 8 hours in dry nitrogen atmosphere. On IR analysis of the reaction solution, the disappearance of bands assigned to -C(=O)F bond was confirmed. The reaction solution was washed with water and distilled under reduced pressure, obtaining 88.3 g of fluoropolyether-containing alcohol compound (IX) having the following structural formula.

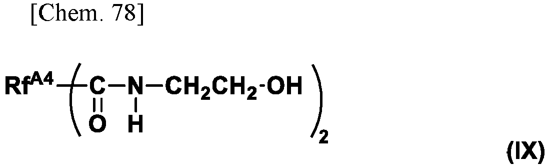

   **Rf^{A4}: -CF₂O-(CF₂O)₂₀(C₂F₄O)₁₉-CF₂-**

Herein Rf^{A4} has a Mn of approximately 3,600 and individual units enclosed in parentheses in Rf^{A4} are randomly arranged.

In a reactor under dry air atmosphere, 50.0 g (hydroxy content 0.026 mol) of fluoropolyether-containing alcohol compound (IX) obtained above was mixed with 50.0 g of THF and 4.0 g (0.026 mol) of methacryloyloxyethyl isocyanate, which was heated at 50°C. To the reactor, 0.15 g of bismuth carboxylate catalyst (XK-640 by Kusumoto Chemicals, Ltd.) was added, followed by 24 hours of stirring at 50°C. The heating step was followed by distillation under reduced pressure, obtaining 32.8 g of a highly viscous liquid substance. By ¹H-NMR and IR analyses, it was identified to be fluoropolyether-containing acrylic compound (A-7).

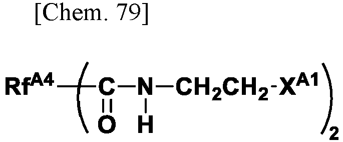

Rf^{A4}: -CF₂O-(CF₂O)₂₀(C₂F₄O)₁₉-CF₂- (A-7)

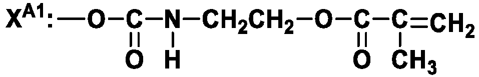

Herein Rf^{A4} has a Mn of approximately 3,600 and individual units enclosed in parentheses in Rf^{A4} are randomly arranged.

It is noted that the fluoropolyether-containing acrylic compounds (A-1) to (A-7) obtained in Synthesis Examples 1 to 7 do not contain any volatile organic compounds.

### Preparation of fluorinated, actinic energy ray-curable compositions

### [Examples 1 to 15 and Comparative Example 1]

Fluorinated, actinic energy ray-curable compositions (F-1) to (F-16) were prepared by using the fluoropolyether-containing acrylic compounds (A-1) to (A-7) obtained in Synthesis Examples 1 to 7, acrylic compounds (B-1) to (B-5) shown below, and photopolymerization initiators (C-1) and (C-2) shown below and blending them in the proportion shown in Table 1.

(B-1) 2-(perfluorobutyl)ethyl methacrylate (viscosity 2.2 mPa·s)
(B-2) 2-hydroxyethyl methacrylate (viscosity 6.1 mPa s)
(B-3) 1,6-hexanediol diacrylate (viscosity 6.5 mPa s)
(B-4) 2-(perfluorohexyl)ethyl methacrylate (viscosity 3.3 mPa·s)
(B-5) 1H,1H,5H-octafluoropentyl methacrylate (viscosity 4.1 mPa·s)

(C-1) 2-hydroxy-2-methylpropiophenone
(C-2) diphenyl(2,4,6-trimethylbenzoyl) phosphine oxide

### Blending proportion of composition

**[Table 1]**

| | Fluorinated, actinic energy ray-curable composition | (A) | Amount of (A) blended, pbw | (B) | Amount of (B) blended, pbw | Amount of (C-1) blended, pbw | Amount of (C-2) blended, pbw |
|---|---|---|---|---|---|---|---|
| Example 1 | (F-1) | (A-1) | 100 | (B-1) | 16 | 0.5 | 0.5 |
| Example 2 | (F-2) | (A-2) | 100 | (B-2) | 25 | 1.0 | 1.0 |
| Example 3 | (F-3) | (A-2) | 100 | (B-1) | 16 | 0.5 | 0.5 |
| Example 4 | (F-4) | (A-3) | 100 | (B-2) | 25 | 1.0 | 1.0 |
| Example 5 | (F-5) | (A-3) | 100 | (B-3) | 16 | 0.5 | 0.5 |
| Example 6 | (F-6) | (A-3) | 100 | (B-1) | 43 | 1.5 | 1.5 |
| Example 7 | (F-7) | (A-3) | 100 | (B-1) | 16 | 0.5 | 0.5 |
| Example 8 | (F-8) | (A-3) | 100 | (B-5) | 16 | 0.5 | 0.5 |
| Example 9 | (F-9) | (A-4) | 100 | (B-3) | 25 | 1.0 | 1.0 |
| Example 10 | (F-10) | (A-4) | 100 | (B-1) | 16 | 0.5 | 0.5 |
| Example 11 | (F-11) | (A-5) | 100 | (B-1) | 43 | 1.5 | 1.5 |
| Example 12 | (F-12) | (A-5) | 100 | (B-4) | 5 | 0.5 | 0.5 |
| Example 13 | (F-13) | (A-5) | 100 | (B-4) | 100 | 3.0 | 3.0 |
| Example 14 | (F-14) | (A-6) | 100 | (B-1) | 25 | 1.0 | 1.0 |
| Example 15 | (F-15) | (A-7) | 100 | (B-3) | 25 | 1.0 | 1.0 |
| Comparative Example 1 | (F-16) | (A-3) | 100 | | | 0.5 | 0.5 |

### Evaluation of appearance of composition

The outer appearance of the fluorinated, actinic energy ray-curable compositions of Examples and Comparative Example was evaluated by visual observation according to the following criterion. The results are shown in Table 2.
○ (good): uniform
× (poor): non-uniform

### Evaluation of viscosity of composition

The viscosity of the fluorinated, actinic energy ray-curable compositions of Examples and Comparative Example was measured at 23°C according to JIS K7117-1 and Z8803. The results are shown in Table 2.

### Evaluation of refractive index of composition

The refractive index of the fluorinated, actinic energy ray-curable compositions of Examples and Comparative Example was measured at temperature 25°C and wavelength 589 nm by an Abbe refractometer (DR-A1 by Atago Co., Ltd.). The results are shown in Table 2.

**[Table 2]**

| | Outer appearance | Viscosity (mPa·s) | Refractive index (-) |
|---|---|---|---|
| Example 1 | ○ | 2,540 | 1.325 |
| Example 2 | ○ | 2,880 | 1.344 |
| Example 3 | ○ | 1,420 | 1.322 |
| Example 4 | ○ | 6,800 | 1.352 |
| Example 5 | ○ | 5,710 | 1.346 |
| Example 6 | ○ | 381 | 1.335 |
| Example 7 | ○ | 3,320 | 1.331 |
| Example 8 | ○ | 3,910 | 1.331 |
| Example 9 | ○ | 11,200 | 1.356 |
| Example 10 | ○ | 8,990 | 1.334 |
| Example 11 | ○ | 1,890 | 1.324 |
| Example 12 | ○ | 69,200 | 1.313 |
| Example 13 | ○ | 233 | 1.326 |
| Example 14 | ○ | 6,870 | 1.338 |
| Example 15 | ○ | 1,490 | 1.350 |
| Comparative Example 1 | ○ | 239,000 | 1.327 |

### Coating and preparation of cured products

Each of the fluorinated, actinic energy ray-curable compositions of Examples and Comparative Example was knife coated onto glass (spacer thickness 2.0 mm). After deaeration in vacuum, using a conveyor type UV-LED irradiation unit (Eye Graphics Co., Ltd., wavelength 365 nm) in nitrogen atmosphere, UV having a peak intensity of 490 mW/cm² was irradiated to the coating in an accumulative dose of 1,000 mJ/cm² from the coating surface and the glass surface, two times in total. The composition was cured into a product having a thickness of about 2 mm.

### Evaluation of refractive index of cured product

The refractive index of the cured products of Examples and Comparative Example was measured at temperature 25°C and wavelength 589 nm by an Abbe refractometer (DR-A1 by Atago Co., Ltd.). The results are shown in Table 3.

### Evaluation of hardness, tensile strength and elongation at break of cured product

The cured products of Examples and Comparative Example were measured for hardness, tensile strength and elongation at break according to JIS K6250, 6251, and 6253. The hardness was measured by Durometer type A. The results are shown in Table 3.

### Water-vapor resistance test of cured product

The cured products of Examples and Comparative Example were heated in air atmosphere at 95°C and RH 100% for 12 hours. The cured products after the test were measured for hardness, tensile strength and elongation at break. The results are shown in Table 3.

**[Table 3]**

| | Refractive index | Hardness (Durometer type A) | | Tensile strength (MPa) | | Elongation at break (%) | |
|---|---|---|---|---|---|---|---|
| | | Initial | After water-vapor resistance test | Initial | After water-vapor resistance test | Initial | After water-vapor resistance test |
| Example 1 | 1.332 | 66 | 62 | 1.8 | 1.7 | 70 | 60 |
| Example 2 | 1.352 | 59 | 57 | 1.2 | 1.1 | 30 | 30 |
| Example 3 | 1.330 | 60 | 59 | 1.3 | 1.2 | 30 | 30 |
| Example 4 | 1.360 | 70 | 70 | 2.4 | 2.3 | 60 | 50 |
| Example 5 | 1.353 | 71 | 72 | 2.0 | 1.9 | 30 | 30 |
| Example 6 | 1.343 | 66 | 65 | 1.9 | 2.0 | 60 | 60 |
| Example 7 | 1.338 | 69 | 70 | 2.2 | 2.3 | 50 | 50 |
| Example 8 | 1.338 | 68 | 68 | 2.2 | 2.1 | 50 | 50 |
| Example 9 | 1.362 | 71 | 72 | 2.0 | 2.3 | 30 | 30 |
| Example 10 | 1.341 | 69 | 70 | 2.1 | 2.1 | 40 | 40 |
| Example 11 | 1.333 | 61 | 61 | 1.2 | 1.2 | 110 | 100 |
| Example 12 | 1.320 | 64 | 63 | 1.1 | 1.1 | 90 | 90 |
| Example 13 | 1.335 | 53 | 53 | 0.8 | 0.7 | 130 | 120 |
| Example 14 | 1.345 | 73 | 72 | 2.8 | 2.8 | 40 | 40 |
| Example 15 | 1.357 | 72 | 64 | 2.2 | 1.6 | 30 | 20 |
| Comparative Example 1 | 1.334 | 75 | 74 | 1.6 | 1.5 | 20 | 20 |

The cured products obtained in Examples 1 to 15 from the fluorinated, actinic energy ray-curable compositions which were prepared by blending fluoropolyether-containing acrylic compounds (A-1) to (A-7) as component (A), acrylic compounds having one or two acryloyl or α-substituted acryloyl groups per molecule (B), and photopolymerization initiators (C) in the specific proportion exhibited a low refractive index and experienced only little changes of hardness, tensile strength and elongation at break after the water-vapor resistance test, indicating satisfactory water-vapor resistance.

In Comparative Example 1, the fluorinated, actinic energy ray-curable composition (F-16) was prepared by blending only fluoropolyether-containing acrylic compound as component (A) and photopolymerization initiator (C), while omitting the acrylic compound having one or two acryloyl or α-substituted acryloyl groups per molecule (B). The composition of Comparative Example 1 had an extraordinarily high viscosity and was awkward to handle.

## Claims

1. A fluorinated, actinic energy ray-curable composition essentially comprising
(A) 100 parts by weight of a fluoropolyether-containing acrylic compound having the general formula (1):
V¹-Rf¹-Z-Y(X)_{b} (1)
wherein Rf¹ is a divalent perfluoropolyether group composed of C₁-C₆ perfluoroalkylene groups and oxygen and having a number average molecular weight of 500 to 40,000, Z is a divalent organic group which may intermediately contain a cyclic structure, Y is a (b+1)-valent C₁-C₂₀ organic group, X is independently a monovalent organic group containing an acryloyl or α-substituted acryloyl group, at least one acryloyl or
α-substituted acryloyl group being contained per molecule on the average, V¹ is hydrogen, fluorine or a monovalent group of the formula: -Z-Y(X)_{b}, and b is an integer of 1 to 10,
(B) 0.1 to 300 parts by weight of an acrylic compound containing one or two acryloyl or α-substituted acryloyl groups per molecule, exclusive of component (A), the acrylic compound having a viscosity of up to 5,000 mPa·s at 23°C, and
(C) 0.01 to 20 parts by weight of a photopolymerization initiator,
the composition having a viscosity of 10 to 100,000 mPa s at 23°C and a refractive index of up to 1.390 at temperature 25°C and wavelength 589 nm.

2. The fluorinated, actinic energy ray-curable composition of claim 1, which is free of a volatile organic compound not having an acryloyl-reactive group.

3. The fluorinated, actinic energy ray-curable composition of claim 1 or 2 wherein in the general formula (1), Rf¹ is a divalent perfluoropolyether group having the following formula: 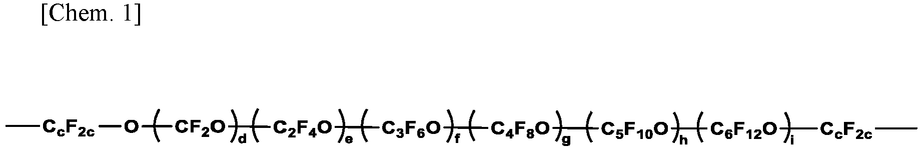 wherein c is independently for each unit an integer of 2 to 6, d, e, f, g, h and i each are an integer of 0 to 200, d+e+f+g+h+i = 4 to 200, each unit may be straight or branched, individual units in parentheses with subscripts d, e, f, g, h and i may be randomly arranged.

4. The fluorinated, actinic energy ray-curable composition of any one of claims 1 to 3 wherein component (A) is a fluoropolyether-containing acrylic compound having the general formula (2):
V²-Rf²-C(=O)-NR¹ₐ[Y²(X²)_{b'}]₂₋ₐ (2)
wherein Rf² is a divalent perfluoropolyether group composed of C₁-C₆ perfluoroalkylene groups and oxygen and having a number average molecular weight of 500 to 40,000, Y² is independently a (b'+1)-valent C₁-C₂₀ organic group, X² is independently a monovalent organic group containing an acryloyl or α-substituted acryloyl group, at least one acryloyl or α-substituted acryloyl group being contained per molecule on the average, R¹ is hydrogen or a C₁-C₈ monovalent hydrocarbon group, V² is hydrogen, fluorine or a monovalent group of the formula: -C(=O)-NR¹ₐ[Y²(X²)_{b'}]₂₋ₐ, a is 0 or 1, and b' is an integer of 1 to 10.

5. The fluorinated, actinic energy ray-curable composition of claim 4 wherein in the general formula (2), Rf² is a divalent perfluoropolyether group having the following formula: 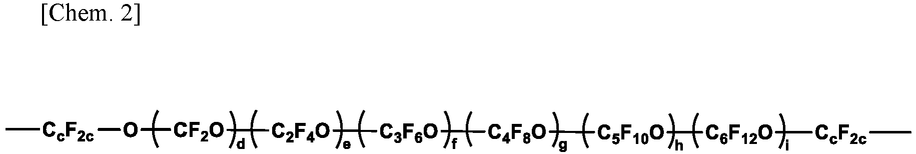 wherein c is independently for each unit an integer of 2 to 6, d, e, f, g, h and i each are an integer of 0 to 200, d+e+f+g+h+i = 4 to 200, each unit may be straight or branched, individual units in parentheses with subscripts d, e, f, g, h and i may be randomly arranged.

6. The fluorinated, actinic energy ray-curable composition of claim 4 or 5 wherein in the general formula (2), Rf² is selected from divalent perfluoropolyether groups having the following structural formulae:
-CF₂CF₂O-(CF₂CF₂CF₂O)_{q}-CF₂CF₂-
wherein q is an integer of 4 to 200, 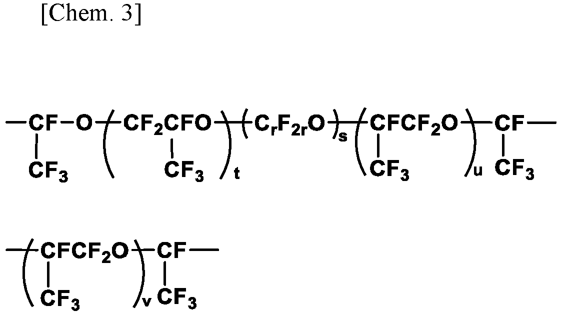 wherein r is an integer of 1 to 6, CᵣF₂ᵣO may be straight or branched, s is an integer of 0 to 6, t and u each are an integer of 1 to 200, t+u is an integer of 2 to 200, s+t+u is an integer of 4 to 200, and v is an integer of 5 to 200.

7. The fluorinated, actinic energy ray-curable composition of any one of claims 4 to 6 wherein in the general formula (2), R¹ is hydrogen and a is 1.

8. The fluorinated, actinic energy ray-curable composition of any one of claims 4 to 7 wherein in the general formula (2), Y² is selected from groups having the following formulae: 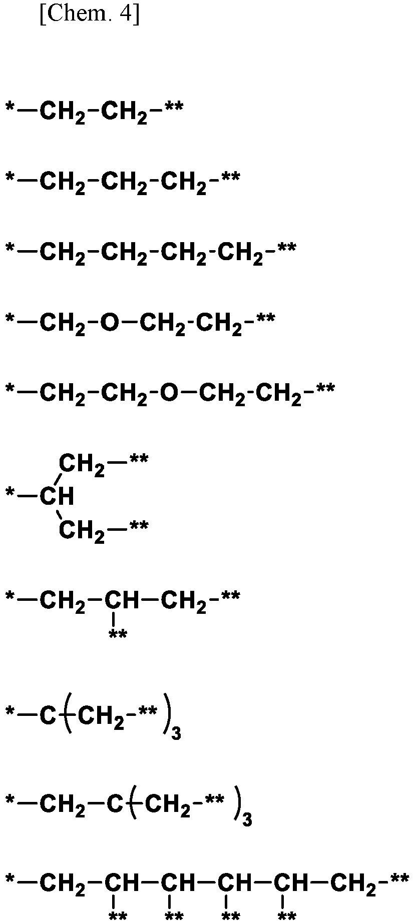 wherein * designates a point of attachment to N and ** designates a point of attachment to X².

9. The fluorinated, actinic energy ray-curable composition of any one of claims 4 to 8 wherein in the general formula (2), X² has the following structural formula: 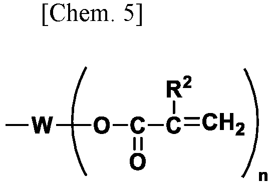 wherein R² is independently hydrogen, fluorine, methyl or trifluoromethyl, W is a single bond, or a di- or trivalent hydrocarbon group which may contain at least one bond selected from ether bond, ester bond and urethane bond, and n is 1 or 2.

10. The fluorinated, actinic energy ray-curable composition of any one of claims 4 to 9 wherein in the general formula (2), X² is selected from groups having the following formulae.

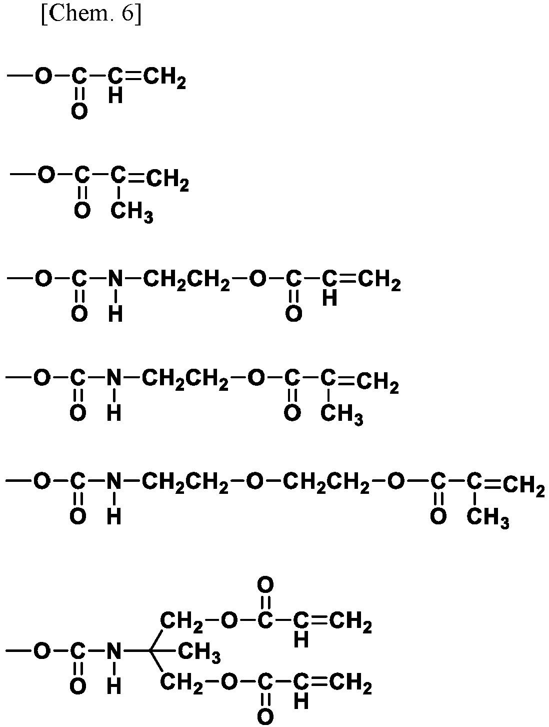

11. The fluorinated, actinic energy ray-curable composition of any one of claims 4 to 10 wherein component (A) is a fluoropolyether-containing acrylic compound having any one of the following formulae: 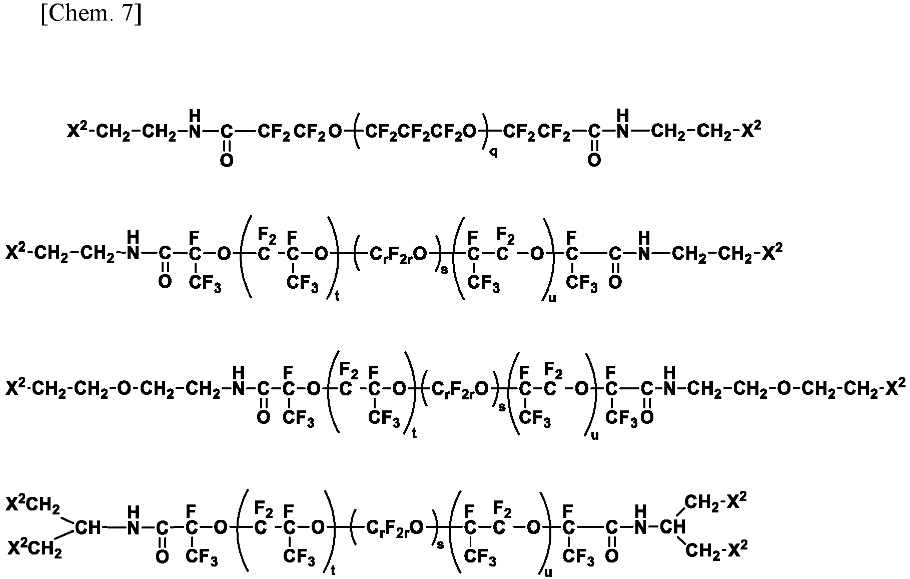 wherein X² is as defined above, q is an integer of 4 to 200, r is an integer of 1 to 6, CᵣF₂ᵣO may be straight or branched, s is an integer of 0 to 6, t and u each are an integer of 1 to 200, t+u is an integer of 2 to 200, and s+t+u is an integer of 4 to 200.

12. The fluorinated, actinic energy ray-curable composition of any one of claims 1 to 11 wherein component (B) is a compound containing a fluoroalkyl group and one or two acryloyl or α-substituted acryloyl groups.

13. The fluorinated, actinic energy ray-curable composition of any one of claims 1 to 12 wherein component (B) is an acrylic compound having any one of the following formulae.

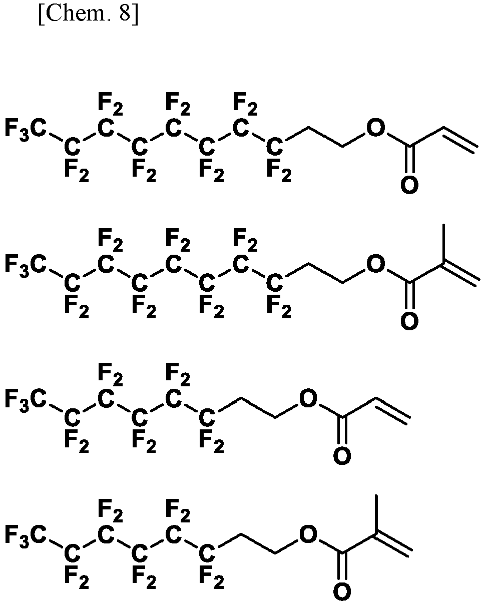

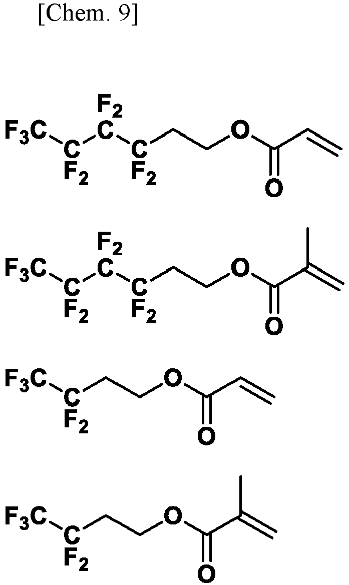

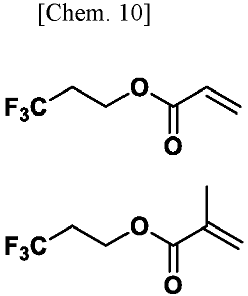

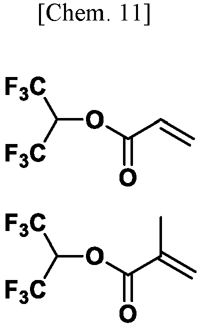

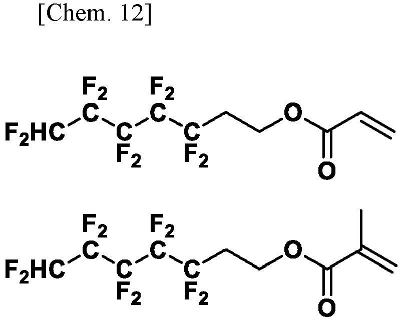

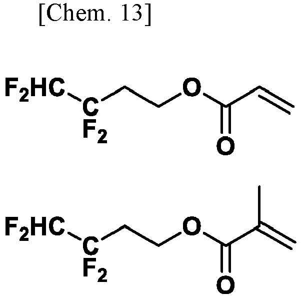

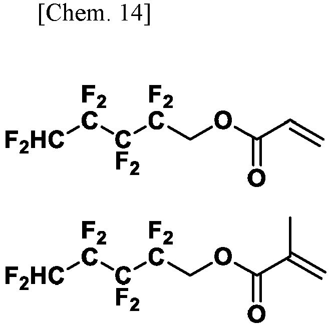

14. The fluorinated, actinic energy ray-curable composition of any one of claims 1 to 13 wherein component (B) is a compound containing at least one C₁-C₈ perfluoroalkyl group and one or two acryloyl or α-substituted acryloyl groups.

15. The fluorinated, actinic energy ray-curable composition of any one of claims 1 to 14 wherein component (B) is an acrylic compound having any one of the following formulae.

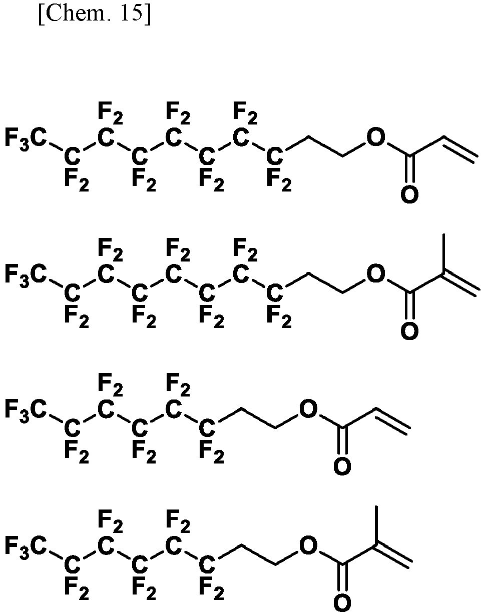

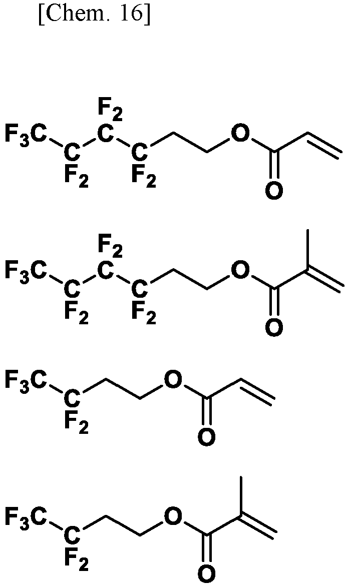

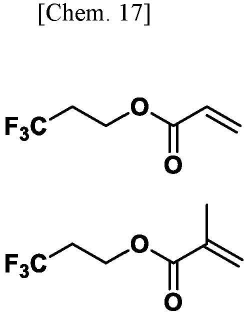

16. The fluorinated, actinic energy ray-curable composition of any one of claims 1 to 15 wherein the photopolymerization initiator as component (C) is free of fluorine in its structure.

17. The fluorinated, actinic energy ray-curable composition of any one of claims 1 to 16 which is for use in an antireflective agent or optical fiber-coating agent.

18. A cured product obtained by curing the fluorinated, actinic energy ray-curable composition of any one of claims 1 to 17.

19. The cured product of claim 18, having a refractive index of up to 1.400 at temperature 25°C and wavelength 589 nm.

20. The cured product of claim 18 or 19, having an initial hardness and a hardness after heating under conditions: 95°C and RH 100% for 12 hours, a change of hardness falling within the range of initial hardness ± 10 points.

21. An article which is entirely or at least partially constructed by the cured product of any one of claims 18 to 20.

22. The article of claim 21, which is an optical part.

23. The article of claim 21 or 22, which is a lens, antireflective coating or optical fiber.
